Europäisches Patentamt

European Patent Office

Office européen des brevets

(11) Veröffentlichungsnummer: **0 169 543 B1**

# EUROPÄISCHE PATENTSCHRIFT

(45) Veröffentlichungstag der Patentschrift: 27.03.91

(51) Int. Cl.5: **B23B 29/04**

(21) Anmeldenummer: 85109219.7

(22) Anmeldetag: 23.07.85

(54) Teilbares Werkzeug für die spanabhebende Bearbeitung.

(30) Priorität: 23.07.84 DE 8421945 U

(43) Veröffentlichungstag der Anmeldung:
29.01.86 Patentblatt 86/05

(45) Bekanntmachung des Hinweises auf die
Patenterteilung:
27.03.91 Patentblatt 91/13

(84) Benannte Vertragsstaaten:
**AT BE CH FR GB IT LI SE**

(56) Entgegenhaltungen:
EP-A- 0 055 998         EP-A- 0 101 917
DE-B- 2 234 389         DE-C- 680 914
DE-C- 851 587           DE-U- 7 032 666
DE-U- 8 421 945         GB-A- 2 070 473

PATENT ABSTRACTS OF JAPAN, Band 7, Nr.
24 (M-189)[1169], 29. Januar 1983

(73) Patentinhaber: **Kastner, Hermann, Dipl.-Ing.
Osterholzallee 89
W-7140 Ludwigsburg(DE)**

(72) Erfinder: **Kastner, Hermann, Dipl.-Ing.
Osterholzallee 89
W-7140 Ludwigsburg(DE)**

## Beschreibung

Die Erfindung betrifft ein teilbares Werkzeug mit den im Oberbegriff von den unabhängigen Ansprüchen 1 oder 15 angegebenen Merkmalen, siehe EP-A-0101917.

Bei Werkzeugmaschinen für die spanabhebende Bearbeitung von Werkstücken, bei denen die Werkzeuge gewisse Mindestabmessungen haben und in der Regel mit Hartmetallschneiden oder keramischen Schneiden bestückt sind, gibt es Bestrebungen, die Werkzeuge derart teilbar auszuführen, daß sie an einer bestimmten Trennstelle in einen die Schneide tragenden Werkzeugkopf und in einen der Befestigung des Werkzeugs an der Werkzeugmaschine dienenden Werkzeughalter getrennt werden können und daß diese beiden Werkzeugteile mit einer Kupplungsvorrichtung miteinander verbunden werden können. Dadurch können die hochbeanspruchten Schneiden leichter und schneller gegen neue Schneiden ausgewechselt werden oder auch bei Bedarf leichter und schneller die Schneidenform gewechselt werden, als das bei kompakten Werkzeugen möglich ist.

Bei einem bekannten Werkzeug dieser Art (DE-AS 22 34 389) ist neben einer kreiszylindrischen Führungsfläche mit stirnseitiger ebener Anlagefläche noch eine kegelstumpfförmige Führungs- und Anlagefläche vorhanden. Da sowohl die zylindrische Führungsfläche und die ebene Anlagefläche wie auch die kegelstumpfförmigen Führungs- und Anlageflächen mit dem betreffenden Werkzeugteil starr verbunden sind, tritt eine statische Überbestimmung auf, durch die bei den unvermeidlichen Fertigungstoleranzen schon bei geringem Versatz einer dieser Flächen entweder ein Klemmen oder ein Klaffen der Führungs- und Anlageflächen auftritt. Die stets vorhandene Tangentialkraft wir mittels zweier Nut- und Feder-Verbindungen aufgenommen, für die an beiden Werkzeugteilen eigens je eine Nut eingearbeitet werden muß. Da diese Nuten in gesonderten Arbeitsgängen hergestellt werden, besteht immer die Gefahr, daß sie ebenfalls aufgrund von Fertigungstoleranzen entweder so weit versetzt sind, daß sie klemmen, oder daß sie zu großes Spiel haben. Für die axiale Verbindung des Werkzeugkopfes mit dem Werkzeughalter dient ein Gewindestift, der in ein quer ausgerichtetes Gewindeloch des Werkzeughalters eingeschraubt wird und der an seinem vorderen Ende eine kegelige Spitze aufweist. Diese greift in eine entsprechend hohlkegelige Ausnehmung des Werkzeugkopfes ein. Da die Längsachse des Gewindeloches und die Längsachse der hohlkegeligen Ausnehmung in axialer Richtung gegeneinander versetzt sind, um überhaupt eine axiale Kraftkomponente zu erzeugen, wird der Gewindestift im Gewindeloch seitlich belastet, wobei die Gewindegänge umso mehr ineinander gedrückt werden, je stärker die axiale Haltekraft sein soll. Das erschwert das Anziehen und Lösen des Gewindestiftes und beschleunigt den Verschleiß des Gewindes und der Kegelflächen. Außerdem wirkt die einseitige Krafteinleitung durch den Gewindestift einer gleichmäßigen Kraftübertragung an den Führungs- und Anlageflächen entgegen. Da diese Befestigungsart mit dem quer ausgerichteten Gewindestift nur von Hand betätigt werden kann, ist eine Automatisierung des Schneidenwechsels ausgeschlossen.

Bei anderen teilbaren Werkzeugen weist die Kupplungsvorrichtung aufeinander abgestimmte Führungs- und Anlageflächen teils am Werkzeugkopf und teils am Werkzeughalter auf. Dazu gehört außerdem eine Spannvorrichtung, die eine relativ zum Werkzeughalter verschiebbare Zugstange aufweist, die mit einem Kraftantrieb verbunden ist und die mit dem Werkzeugkopf gekoppel werden kann, um diesen gegen den Werkzeughalter zu spannen.

Bei einer bekannten Ausführung eines teilbaren Drehmeißels sind an der Trennstelle zwischen Werkzeugschaft und Werkzeugkopf prismatische Führungsflächen oder Anlageflächen vorhanden. Die Zugstange weist einen zylindrischen Zugkopf auf, der einen schlüssellochförmigen Grundriß hat und der am Werkzeugkopf in eine Ausnehmung eingreift, die ebenfalls einen schlüssellochförmigen Grundriß hat, wobei sie an der Schmalseite offen ist. Bei dieser Ausführungsform kann der Werkzeugkopf stets nur in einer ganz bestimmten Stellung mit dem Werkzeugschaft verbunden werden. Das Verbinden und Trennen des Werkzeugkopfes und des Werkzeugschaftes erfolgt auf einer Bewegungsbahn, die rechtwinklig zur Längsachse des Werkzeugschaftes ausgerichtet ist. Das schränkt die Einsatzmöglichkeiten eines solchen Werkzeuges ein, insbesondere dann, wenn im Zuge der Bearbeitung eines Werkstückes die Hauptschnittkräfte nach Größe und Richtung sich ändern.

Bei einem anderen bekannten teilbaren Werkzeug sind an der Trennstelle teils ebene und teils zylindrische Führungs- und Anlageflächen vorhanden. Sie bilden am Werkzeugkopf einen kreisringzylindrischen Kragen und am Werkzeughalter einen in diesen Kragen hineinpassenden abgesetzten zylindrischen Zapfen. Sie dienen der Aufnahme der axialen und radialen Kräfte. Für die Übertragung tangentialer Kräfte ist im Bereich der ebenen Stirnfläche eine diametral ausgerichtete Nut-und-Federverbindung vorhanden. Die Kupplungsvorrichtung weist außerdem einige Klemmbolzen auf die im Zapfen des Werkzeughalters in je einer radial auswärts und zugleich schräg rückwärts gerichteten Bohrung längsverschiebbar geführt sind und die mittels eines Rundkeils am Ende der Zugstange nach außen getrieben werden können, so daß sie sich an einer im Inneren des Kragens vorhandenen Konusfläche des Werkzeugkopfes anlagen können. Durch die schräge Führung der Klemmbolzen wird der Werkzeugkopf teils axial und teils radial verspannt. Die radialen Spannkräfte wirken der gegenseitigen Anlage der Zylinderflächen zwischen dem Kragen am Werkzeugkopf und dem Zapfen am Werkzeughalter entgegen, weshalb der Kragen nicht beliebig dünnwandig ausgeführt werden darf. Dadurch wiederum ist der radiale Abstand der Klemmflächen an den Klemmbolzen von der Längsachse des Werkzeuges verhältnismäßig klein, so daß durch diese Kupplungsvorrichtung nur verhältnismäßig geringe Kippkräfte aufgenommen werden können.

Bei einer anderen bekannten Ausführungsform eines teilbaren Werkzeuges (siehe EP-A-0101917) werden an der Trennstelle die Fürungs- und Anlageflächen durch eine Plan-Kerbverzahnung (Hirth-Verzahnung) gebildet. Die Kupplungsvorrichtung weist einen mit dem Werkzeugkopf verbundenen Spannbolzen mit kegelstumpfförmigen Kupplungsflächen auf. Im Inneren des Werkzeughalters ist eine Spannzange vorhanden, deren einzelne Spannbacken teils an kegeligen und teils an zylindrischen Führungsflächen geführt sind und auf deren Innenseite mit entsprechenden Gegenflächen zu den Konusflächen am Spannbolzen versehen sind. Bei einer durch die Zugstange ausgelösten Schließbewegung der Spannzange werden über den von ihr erfaßten Spannbolzen die beiden Plan-Kerbverzahnungen in axialer Richtung gegeneinander verspannt und zugleich der Spannbolzen in radialer Richtung eingeklemmt. Die Plan-Kerbverzahnungen liefern zugleich eine axiale, eine radiale und eine tangentiale Kraftübertragung vom Werkzeugkopf auf den Werkzeughalter. Dadurch, daß die Zähne der Plan-Kerbverzahnungen radial ausgerichtet sind, können radiale Kräfte nur durch die mehr oder minder im rechten Winkel zur Kraftrichtung ausgerichteten Zähne aufgenommen werden. Dadurch, daß von den nicht parallel zur Kraftrichtung ausgerichteten Zähnen die Zahnflanken gegenüber der Planfläche geneigt sind, entsteht bei der Übertragung einer radialen Kraft oder Querkraft eine nicht unbeträchtliche axiale Kraftkomponente. Bei der Übertragung tangentialer Kräfte tritt ebenfalls eine beträchtliche Axialkomponente auf. Da die Werkzeugschneide am Werkzeugkopf in aller Regel außermittig angeordnet ist und sie dabei oft einen beträchtlichen Abstand von der Werkzeugachse hat, addieren sich die Axialkomponenten dieser Kräfte auf einer Seite zu beträchtlichen Werten. Die axiale Komponente drängt die Plan-Kerbverzahnungen auseinander. Diese axiale Kraftkomponente muß von der Spannvorrichtung zusätzlich aufgenommen werden.

Der Erfindung liegt die Aufgabe zugrunde, ein teilbares Werkzeug zu schaffen, das einerseits einfach aufgebaut ist und das andererseits an der Trennstelle günstigere Kraftübertragungsverhältnisse als die bekannten teilbaren Werkzeuge hat. Diese Aufgabe wird durch ein Werkzeug mit den im Anspruch 1 oder im Anspruch 15 angegebenen Merkmalen gelöst.

Dadurch, daß an der Trennstelle die Führungs- und Anlageflächen als Polygonflächen mit abgerundetem Kantenbereich ausgebildet sind, deren Mantellinien gegenüber einer normal zur Längsachse ausgerichteten Ebene und damit auch gegenüber der Längsachse selbst einen gewissen Neigungswinkel haben, wird eine großflächige gegenseitige Anlage der beiden Werkzeugteile erreicht, durch die axiale, radiale und tangentiale Kräfte gleichermaßen gut aufgenommen und übertragen werden können. Das gilt vor allem für radiale Kräfte, die unmittelbar in ihrer diametralen Ebene aufgenommen werden. Diese Polygonflächen lassen sich auf modernen Werkzeugmaschinen auf einfache Weise in einer Werkstückaufspannung sehr genau herstellen. Dabei können auch Werkstoffe mit höherer Festigkeit, insbesondere mit höherer Oberflächenfestigkeit, verwendet werden, die im Bedarfsfalle durch Schleifen fertigbearbeitet werden können. Dadurch, daß dieses Polygonflächen die axialen und radialen ebenso wie die tangentialen Flächenkomponenten in sich vereinigen, kann die Anordnung gesonderter Führungs- und Anlageflächen entfallen, die sonst für die Aufnahme einer der betreffenden Kraftkomponenten erforderlich sind. Dadurch ist das teilbare Werkzeug sowohl hinsichtlich seiner Fertigung wie auch hinsichtlich seiner Handhabung sehr einfach. Durch die Spannvorrichtung kann der Wechsel des Werkzeugkopfes automatisiert werden.

Durch eine Ausgestaltung des Werkzeuges nach Anspruch 4 wird erreicht, daß die Werkzeugköpfe, die öfters vom Werkzeughalter abgenommen und danach auf metallenen Magazinsitzen und dergleichen abgesetzt werden, durch die Ausstattung mit der Außenfläche gedrungener ausgebildet sind und daher gegen Verformungen und Beschädigungen weniger empfindlich sind. Der an der Werkzeugmaschine verbleibende Werkzeughalter mit der Innenfläche ist schon wegen dieser Anordnungs- und Handhabungsweise weniger gefährdet. Durch eine Ausgestaltung des Werkzeuges nach Anspruch 5 benötigen die weit außen gelegenen Führungs- und Anlageflächen bei einem vorgegebenen Flächenmaß nur einen verhältnismäßig geringen Anteil des radialen Bereiches der Querschnittsfläche, so daß für die übrigen Teile noch ein verhältnismäßig großer Querschnittsbereich zur Verfügung steht. Außerdem wird durch diese Maßnahme das Gegenmoment verhältnismäßig groß, das die Axialkraft des Spannbolzens in Bezug auf die achsferne Auflagefläche auf der einen Flächenseite auszuüben vermag.

Durch eine Ausgestaltung des Werkzeuges nach Anspruch 6 wird erreicht, daß die Führungs- und Anlageflächen zumindest annähernd tangential zur Einspannstelle des als einseitig eingespannter Träger zu betrachteten Spannbolzens ausgerichtet sind, so daß in soweit eine Kraftübersetzung durch ungünstige geometrische Verhältnisse vermieden wird.

Durch eine Ausgestaltung des Werkzeuges nach Anspruch 7 wird eine Spannvorrichtung geschaffen, die in radialer Richtung einen verhältnismäßig geringen Raumbedarf hat, so daß sie ohne Beeinträchtigung ihrer radialen Klemmwirkung und ihrer axialen Zugkräfte auch in Werkzeughaltern mit verhältnismäßig geringen Außenabmessungen untergebracht werden kann. Außerdem fluchten bei dieser Spannnvorrichtung die - neben den Kupplungsflächen zwischen der Spannzange und dem Spannbolzen - für eine genaue und gleichmäßig gute Einspannung des Spannbolzens wichtigen zylindrischen Führungsflächen auf der Außenseite der Spannzange und am Werkzeughalter miteinander, so daß sie in einer Einspannung des betreffenden Werkstückes und vor allem in einem durchgehenden Bearbeitungsgang hergestellt werden können und dadurch die bestmögliche Übereinstimmung ihrer geometrischen Verhältnisse untereinander gewährleistet ist. Selbst beim Auftreten von Fertigungstoleranzen bezüglich der Durchmesser oder Halbmesser der zylindrischen Führungsflächen ist eine genaue achsparallele Ausrichtung der einzelnen Spannbacken der Spannzange gewährleistet.

Bei einer Ausgestaltung des Werkzeuges nach Anspruch 8 entfallen jegliche kegeligen Führungsflächen zwischen der Spannzange und dem Werkzeughalter. Ihre Führungsflächen sind gleiche durch gehende Zylinderflächen. Durch den Wegfall der kegeligen Führungsflächen und des entsprechenden radialen Bewegungsraumes der Spannbacken der Spannzange wird eine hinsichtlich der radialen Abmessungen noch kompaktere Spannvorrichtung geschaffen. Der eingesparte Bewegungsraum und die geringere radiale Bauhöhe zumindest einiger der Teile der Spannvorrichtung kann entweder für eine Verringerung der Außenabmessungen des Werkzeuges oder für eine radiale Verstärkung einiger der Teile der Spannvorrichtung oder auch für beides in entsprechender Aufteilung der Maßnahmen genutzt werden. Bei dieser Ausgestaltung entfällt wegen des Wegfalls der kegeligen Führungsflächen die erste axiale Bewegungsphase der Spannzangen entlang der kegeligen Führungsflächen. Wegen der ständig vorhandenen gegenseitigen Anlage der durchgehenden zylindrischen Führungsflächen entfällt auch ein großer Teil der zweiten axialen Bewegungsphase zur Herstellung eines ausreichend großen axialen Überdeckungsgrades, wie er bei einzelstehenden zylindrischen Führungsflächen erforderlich ist. Weil überdies die Spannbacken für das Einspannen des Spannbolzens im eigentlichen Sinne des Wortes nur einen verhältnismäßig kurzen axialen Weg benötigen, können die Kupplungsflächen zwischen dem Spannbolzen und der Spannzange in axialer Richtung verhältnismäßig dicht aneinander gerückt werden, so daß im gleichen Längenabschnitt entweder mehr Kupplungsflächen untergebracht werden können und/oder der Abschnitt mit den Kupplungsflächen verhältnismäßig kurz ausgeführt werden kann. Dadurch und durch die Verringerung des axialen Bewegungsraumes der Spannzange wird eine auch in axialer Richtung sehr kompakte Spannvorrichtung geschaffen. Bei einer Ausgestaltung des Werkzeuges nach Anspruch 9 werden die gleichen Vorteile wie zuvor erreicht. Der größere Drehweg wird mindestens zum Teil durch die Vergrößerung des Anteils der einander überdeckenden Flächen bei den Kupplungsflächen wieder ausgeglichen, wodurch eine weitere axiale Verkürzung der Spannvorrichtung möglich ist. Mit einer Weiterbildung des Werkzeuges nach Anspruch 10 werden wieder die Vorteile der Schnellkupplung mit dem kürzeren Drehweg erreicht, wobei die Verringerung des Überdeckungsgrades durch eine entsprechende Vergrößerung der Anzahl der Gewindegänge ausgeglichen werden kann.

Bei einer Ausgestaltung des Werkzeuges nach Anspruch 11 wird erreicht, daß die radiale Komponente der Einspannkräfte zwischen dem Spannbolzen und der Spannzange unmittelbar an die zylindrische Führungsfläche am Werkzeughalter übertragen wird.

Mit einer fallweisen Ausgestaltung des Werkzeuges nach Anspruch 12 oder nach Anspruch 13 wird eine besonders wirksame Einspannung des Spannbolzens erreicht.

Bei einer Ausgestaltung des Werkzeuges nach Anspruch 14 wird das Einkuppeln der Kupplungsflächen des Spannbolzens und der Spannzange in Umfangsrichtung erleichtert, weil dabei in axialer Richtung selbsttätig eine Relativstellung der beiden Teile erreicht wird, in der in Umfangsrichtung ihre Kupplungsflächen "Zahn auf Lücke" stehen.

Durch eine Ausgestaltung des Werkzeugs nach Anspruch 16 wird eine einfach herzustellende Drehvorrichtung für die Ausführungsformen geschaffen, die eine Drehbewegung für den Kuppelvorgang erfordern.

Durch eine Ausgestaltung des Werkzeugs nach Anspruch 17 wird eine genau zentrierende und zugleich sehr steife Verbindung zwischen dem Spannbolzen und dem Werkzeugkopf geschaffen. Diese wird durch eine Weiterbildung nach Anspruch 18 noch dadurch unterstützt, daß der Spannbolzen und der Werkzeugkopf an einer in axialer Richtung von ihren kegelstumpfförmigen Führung- und Anlageflächen entfernten Stelle nochmals in radialer Richtung genau geführt werden. Diese Vorteile kommen bei einer Weiterbildung nach Anspruch 19 dadurch noch stärker zur Geltung, daß das Sägezahngewinde in der hier gewählten Zugrichtung keinerlei radial ausgerichtete Kräfte erzeugt.

Im folgenden wird die Erfindung anhand einiger in den Zeichnungen dargestellter Ausführungsbeispiele näher erläutert. Es zeigen:

Fig. 1     teils eine Seitenansicht und teils einen Längsschnitt eines ersten Ausführungsbeispieles des Werkzeuges gemäß der Erfindung in der Spannstellung oder Betriebsstellung;

Fig. 2     eine Seitenansicht bzw. einen Längsschnitt des Werkzeuges nach Fig. 1 in der Lösestellung;

Fig. 3     eine teilweise geschnitten dargestellte Stirnansicht eines Werkzeugkopfes des Werkzeuges nach Fig. 1;

Fig. 4     eine teilweise geschnitten dargestellte Stirnansicht des Werkzeugkopfes eines abgewandelten Werkzeuges entsprechend Fig. 1;

Fig. 5     teils eine Seitenansicht und teils einen Längsschnitt eines zweiten Ausführungsbeispieles des Werkzeuges gemäß der Erfindung;

Fig. 6     einen Querschnitt des Werkzeuges nach Fig. 5;

Fig. 7 und 8     einen Querschnitt eines teilweise abgewandelten Werkzeuges entsprechend Fig. 5 in verschiedenen Betriebsstellungen;

Fig. 9     einen ausschnittweise und vergrößert dargestellten Längsschnitt einer Abwandlung des Werkzeuges nach Fig. 5;

Fig. 10     eine ausschnittweise dargestellte Abwicklung des Ausschnittes nach Fig. 9;

Fig. 11     eine Stirnansicht eines Teils des Werkzeuges nach Fig. 9;

Fig. 12     teils eine Seitenansicht und teils einen Längsschnitt eines dritten Ausführungsbeispieles des Werkzeuges gemäß der Erfindung;

Fig. 13     eine schematische Stirnansicht einiger Teile des Werkzeuges nach Fig. l2;

Fig. 14     teils eine Seitenansicht und teils einen Längsschnitt eines vierten Ausführungsbeispieles des Werkzeuges gemäß der Erfindung.

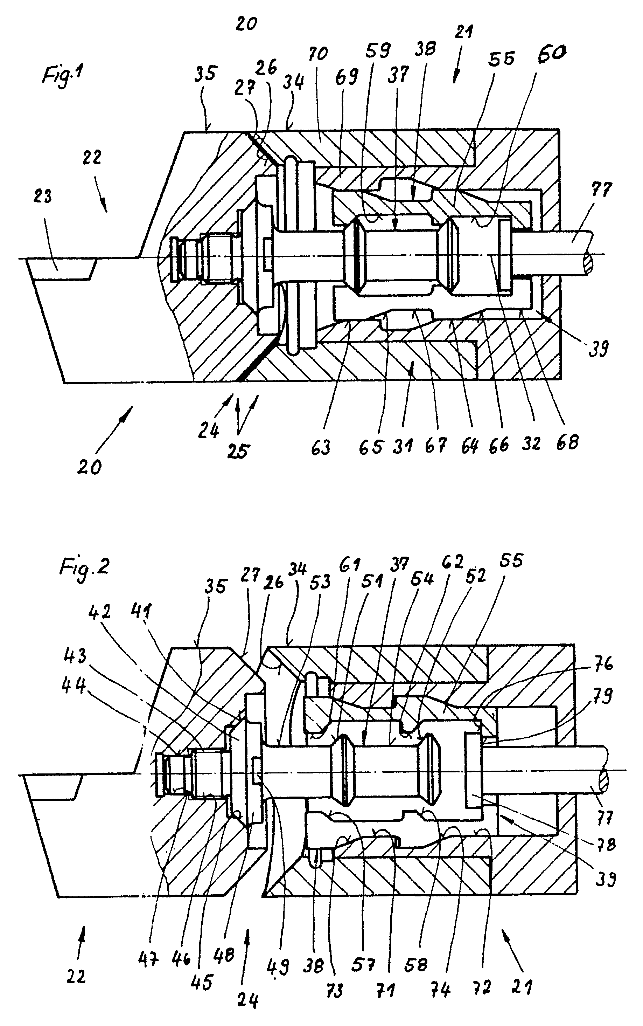

Das aus Fig. 1 und 2 ersichtliche Werkzeug 20 wird als Drehmeißel oder als Bohrmeißel eingesetzt. Es weist zwei Hauptbauteile auf, nämlich einen Werkzeughalter 21 und einen Werkzeugkopf 22. Der Werkzeughalter 21 dient der Befestigung des Werkzeuges 10 an einer nicht dargestellten Werkzeugmaschine. Die von der Art und vom Aufbau der Werkzeugmaschine abhängigen Gestaltungsmerkmale des Werkzeughalters und der Verbindungselemente sind ebenfalls nicht dargestellt. Der Werkzeugkopf 22 trägt den Schneidenkörper, der im folgenden kurz als Schneide 23 bezeichnet ist und der hier als aufgelötete Hartmetall-Schneide ausgebildet und dargestellt ist.

Das Werkzeug 20 ist teilbar. Der Werkzeughalter 21 und der Werkzeugkopf 22 können an einer Trennstelle 24 voneinander getrennt werden. Im gespannten Zustand, dem Betriebszustand (Fig. 1), werden die beiden Werkzeugteile mittels einer Kupplungsvorrichtung 25 miteinander verbunden.

Die Kupplungsvorrichtung 25 weist je eine Führungs- und Anlagefläche 26 bzw. 27 auf, (Fig. 2), die am Werkzeughalter 21 und am Werkzeugkopf 22 angeordnet sind. An diesen Führungs- und Anlageflächen 26 und 27 liegen die beiden Werkzeugteile 21 und 22 aneinander an und führen gleichzeitig einander in der richtigen gegenseitigen Zuordnung. Daneben weist die Kupplungsvorrichtung 25 eine Spannvorrichtung 31 auf. Sowohl die Führungs- und Anlageflächen 26 und 27 wie auch die Spannvorrichtung 31 und ihre Teile sind mittig zu einer gemeinsamen Achse 32 des Werkzeughalters 21 und des Werkzeugkopfes 22 angeordnet.

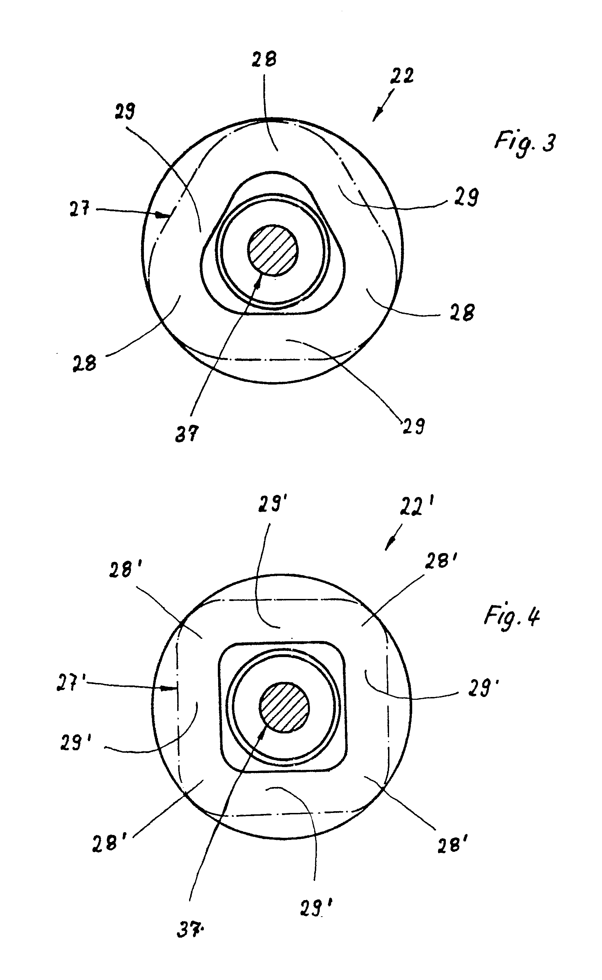

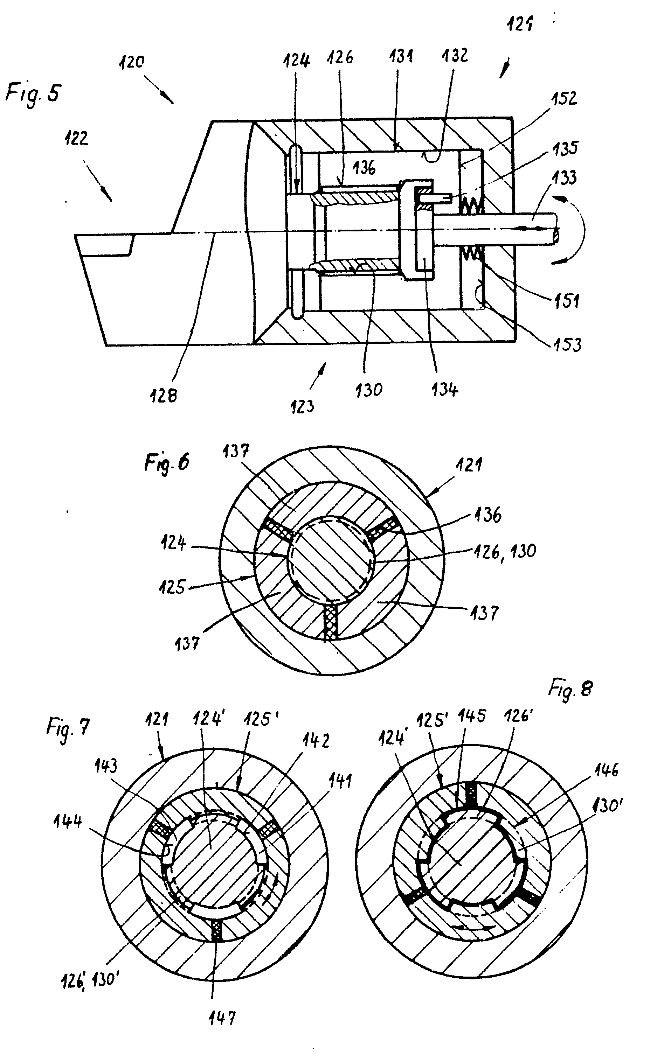

Die Führungs- und Anlageflächen 26 und 27 sind aufeinander abgestimmte Pyramidenstupfflächen mit abgerundeten Kantenbereichen 28 (Fig. 3 und 4), die im Bereich der einander zugekehrten Stirnseiten der beiden Werkzeugteile angeordnet sind und zumindest annähernd im gleichen Halbmesserbereich gelegen sind. Die beiden Führungs- und Anlageflächen 26 und 27 werden durch gerade Mantellinien gebildet, die mit einer normal zur gemeinsamen Achse 32 ausgerichteten Ebene 33 einen bestimmten Neigungswinkel oder mit der gemeinsamen Achse 32 den entsprechenden Komplementärwinkel einschließen. Der Neigungswinkel ist um mindestens den Winkelwert des Reibungsbeiwertes $\mu$ zwischen den beiden Führungs- und Anlageflächen 26 und 27 von 90° verschieden. Entsprechend ist der Neigungswinkel um den Winkelwert von 0° verschieden. Die Größe des Neigungswinkels richtet sich unter anderem danach, in welchem Verhältnis zueinander die zu übertragenden Radialkräfte und Axialkräfte auftreten. Beim Überwiegen der Radialkräfte ist ein kleinerer Neigungswinkel günstiger. Umgekehrt ist beim Überwiegen der Axialkräfte ein größerer Neigungswinkel günstiger. Die Führungs- und Anlage flächen 26 und 27 sind an beiden Werkzeugteilen 21 und 22 in einem möglichst weit außen gelegenen Halbmesserbereich angeordnet, damit der Abstand zur gemeinsamen Achse 32 möglichst groß ist und ein möglichst großer Momentenarm entsteht. Sie schließen jeweils an die außenliegende Umfangsfläche 34 bzw. 35 des Werkzeughalters 21 und des Werkzeugkopfes 22 an und erstrecken sich einwärts bis zur innenliegenden Umfangsfläche der Werkzeugteile, die die Spannvorrichtung 31 und ihre Teile umgeben. Die radiale Abmessung der Flächen 26 und 27 richtet sich nach der Größe der zu übertragenden Kräfte und der zulässigen Flächenpressung, wobei die unvermeidlichen elastischen Verformungen zu berücksichtigen sind. Im Rahmen dieser Erfordernisse werden die Flächen 26 und 27 auf einen möglichst kleinen Halbmesserbereich begrenzt, damit bei vorgegebenen Außenabmessungen der beiden Werkzeugteile für die übrigen Einzelteile, insbesondere für die Teile der Spannvorrichtung 31, ein möglichst großer Raum zur Verfügung steht.

Die Führungs- und Anlageflächen 26 und 27 weisen drei zumindest annähernd gerade Flanken 29 und die drei abgerundeten Kantenbereiche 28 auf. Ihre Querschnittsgestalt hat die Form einer Epizykloide oder einer Äquidistante dazu, bei der das Verhältnis des Halbmessers r des Planetenrades zum Halbmesser R des Grundrades 1 : 3 beträgt und bei der die Exzentrizität $e = r/r+R$ ist. Der Krümmungsradius in den Kantenbereichen 28 ist zumindest annähernd gleich 12,5 e. Bei der Einhaltung dieser Bedingungen können Werkstück und Werkzeug mittels bestimmter Lenkergetriebe auf den aus der Epizykloidenerzeugung sich ergebenden Relativbahnen geführt werden.

Bei der aus Fig. 4 ersichtlichen Ausführungsform weisen die Führungs-und Anlageflächen 26' und 27' vier zumindest annähernd gerade Flanken 29' und vier abgerundete Kantenbereiche 28' auf. Bei dieser Ausführungsform wird bevorzugt zwischen je einer Flanke 29' und der ihr benachbarten Abrundungsfläche 28' eine Übergangsfläche vorgesehen, die beim relativen Umlauf des Werkzeuges um das Werkstück, oder umgekehrt, einen ruckfreien Übergang zwischen den Flanken 29' und den abgerundeten Kantenbereichen 28' ermöglichen.

Bei beiden Ausführungsformen der Führungs- und Anlageflächen 26 und 27 oder 26' und 27' ist es zweckmäßig, die am Werkzeugkopf 22 vorhandene Fläche 27 bzw. 27' als Außenfläche auszubilden, weil dann der Werkzeugkopf 21 eine insgesamt gedrungenere Gestalt erhält, und die an seinem Ende gelegene mehr oder minder schmale Stirnfläche innen gelegen ist und somit bei der häufigen Handhabung des Werkzeugkopfes von Hand oder durch Automaten weniger stark gefährdet ist. Die am Werkzeughalter 21 vorhandene Fläche 26 bzw. 26' ist dann als Innenfläche ausgebildet. Da der Werkzeughalter in der Regel an seinem Platze in der Werkzeugmaschine bleibt, ist die bei ihm dann außen liegende schmale Stirnfläche ohnehin weniger stark gefährdet.

Die Spannvorrichtung 31 weist einen Spannbolzen 37, eine Spannzange 38 und eine die Spannzange 38 betätigende Zugvorrichtung 39 auf.

Der Spannbolzen 37 ist mit dem Werkzeugkopf 22 abnehmbar verbunden, wobei er außerdem daran genau mittig geführt ist. Der Spannbolzen 37 weist zu diesem Zweck (Fig. 2) eine kegelstumpfförmige Führungs- und Anlagefläche 41 (als Außenkonus) auf, die an der Umfangsfläche eines Bundes 42 angeordnet ist, der in einem gewissen axialen Abstand vom Ende des Spannbolzens 37 vorhanden ist. In Richtung zum Ende des Spannbolzens 37 hin schließt an den Bund 42 ein zylindrischer Abschnitt mit einem Schraubengewinde 43 an. Dieses Schraubengewinde 43 ist als Sägezahngewinde ausgebildet, dessen annähernd rechtwinklig zur gemeinsamen Achse 32 ausgerichtete Gewindeflanke vom Werkzeugkopf 22 abgekehrt ist. An diesen Abschnitt mit dem Schraubengewinde 43 schließt ein letzter Abschnitt mit einer zylindrischen Führungsfläche 44 an. In entsprechender Weise sind am Werkzeugkopf 22 eine kegelstumpfförmige Führungs- und Anlagefläche 45 (als Innenkonus), daran anschließend ein Abschnitt mit einem Muttergewinde 46 und ein letzter Abschnitt mit einer glatten zylindrischen Führungsfläche 47 vorhanden, die auf die entsprechenden Gegenflächen am Spannbolzen 37 abgestimmt sind. Auf der vom Gewinde 43 abgekehrten Seite des Bundes 42 mit der Kegelstumpffläche 41 ist ein zylindrischer Bund 48 vorhanden, der mit zwei oder mehr Anflachungen 49 versehen ist, damit der Spannbolzen 37 am Werkzeugkopf 22 festgezogen werden kann.

Der Spannbolzen 37 weist in einiger Entfernung von der Befestigungsstelle mit dem Werkzeugkopf 22 zwei Kupplungsflächen 51 und 52 auf. Diese Kupplungsflächen 51 und 52 sind als Kegelstumpfflächen ausgebildet. Sie haben untereinander den gleichen Innendurchmesser und den gleichen Außendurchmesser. Ihr Kegelspitzenwinkel liegt zwischen 45° und 90° und beträgt bevorzugt 60°. Die Flächennormale dieser Kupplungsflächen 51 und 52 hat eine radial auswärts gerichtete Komponente und eine zum Werkzeugkopf 22 hin gerichtete axiale Komponente, wobei die Flächennormale beider Kupplungsflächen 51 und 52 untereinander parallel ausgerichtet sind. Wenn bei solchen umlaufenden Flächen Angaben über die Ausrichtung ihrer Flächennormale gemacht werden und dabei auf die Ausrichtung der Flächennormale einer anderen Fläche oder auf die Anordnung bestimmter Teile Bezug genommen wird, ist stets davon auszugehen, daß diese Angaben auf jeweils dieselbe Schnittebene, insbesondere dieselbs Längsschnittebene, bezogen sind, die im allgemeinen mit der Zeichenebene der Darstellung gleichzusetzen ist.

Die beiden Kupplungsflächen 51 und 52 am Spannbolzen 37 haben untereinander einen bestimmten axialen Abstand. An den kleineren Durchmesser der Kupplungsflächen 51 und 52 schließt je eine zylindrische Übergangsfläche 53 bzw. 54 an. Die Übergangsfläche 53 erstreckt sich von der Kupplungsfläche 51 aus bis in die Nähe der Befestigungsstelle mit dem Werkzeugkopf 22 hin. Die Übergangsfläche 54 erstreckt sich von der Kupplungsfläche 52 aus bis zur Rückseite der Kupplungsfläche 51 hin. Die Rückseite beider Kupplungsflächen ist im allgemeinen ebenfalls eine Kegelstumpffläche, die jedoch einen erheblich stumpferen Kegelspitzenwinkel als die Kupplungsfläche hat.

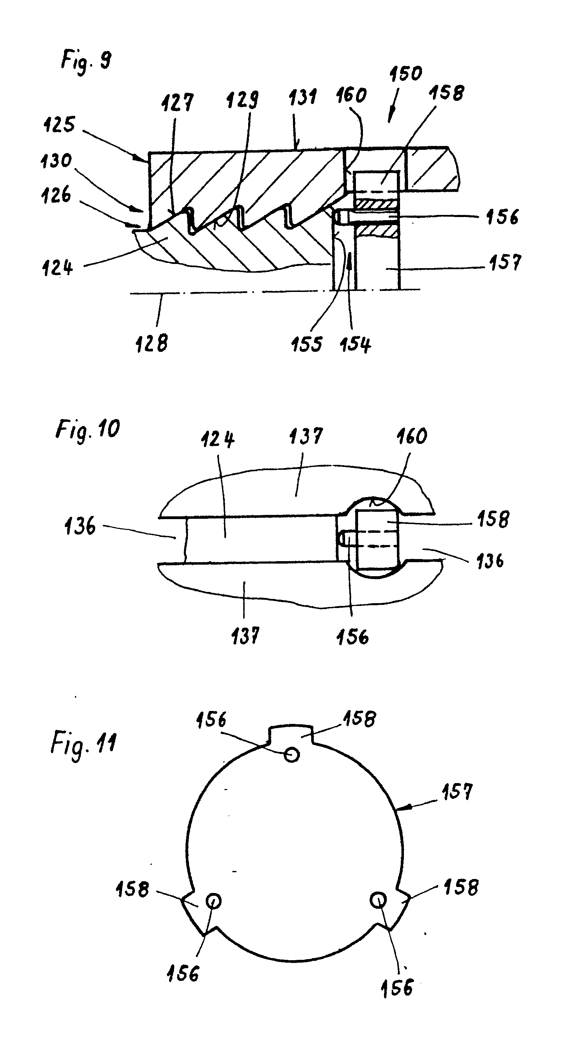

Die im Werkzeughalter 21 angeordnete Spannzange 38 wird durch mehrere Längsschlitze in voneinander getrennte Spannbacken 55 unterteilt. Diese werden mittels gummielastischer Federelemente zusammengehalten, die in den Schlitzen angeordnet sind (Fig. 6 und 7) und mit den einzelnen Spannbacken verbunden sind, insbesondere daran angegossen oder anvulkanisiert sind, oder die damit verklebt sind. Wenn in Bezug auf die Spannzange 38 Angaben über einzelne Gestaltungsmerkmale, insbesondere über die Anordnung, Ausrichtung oder Abmessung eines ihrer Einzelmerkmale gemacht werden, gelten diese auch in Bezug auf die einzelnen Spannbacken mit der Maßgabe, daß diese die gleiche gegenseitige Zuordnung haben wie vor der Zerteilung des Spannzangenkörpers.

Die Spannzange 38 ist in erster Näherung ein hohlzylindrisches Gebilde. Sie ist auf ihrer Innenseite mit zwei Kupplungsflächen 57 und 58 versehen, die als Kegelstumpfflächen ausgebildet sind. Deren Flächennormale hat die umgekehrte Ausrichtung wie die Flächennormale der Kupplungsflächen 51 und 52 am Spannbolzen 37. Die Kupplungsflächen 57 und 58 haben untereinander den gleichen Innenhalbmesser und den gleichen Außenhalbmesser, die geringfügig größer als die entsprechenden Maße der Kupplungsflächen 51 und 52 am Spannbolzen 37 sind. Diese Kupplungsflächen 57 und 58 haben untereinander den gleichen axialen Abstand, den die Kupplungsflächen 51 und 52 am Spannbolzen 37 haben. Sie sind außerdem an der Spannzange 38 so angeordnet, daß sie in deren Spannstellung (Fig. 1) zum größten Teil in den gleichen axialen Abschnitten wie die Kupplungsflächen 51 und 52 am Spannbolzen stehen und an diesen anliegen.

An den Außenhalbmesser der Kupplungsflächen 57 und 58 schließt in der vom Werkzeugkopf 21 abgekehrten Richtung je eine zylindrische Übergangsfläche 59 bzw. 60 an, deren axiale Erstreckung etwas größer ist als der größte axiale Verstellweg der Spannzange 38 zwischen ihrer Spannstellung (Fig. 1) und ihrer Lösestellung (Fig. 2). Vom Innenhalbmesser der Kupplungsflächen 57 und 58 geht in der umgekehrten axialen Richtung je eine ebenfalls zylindrische Übergangsfläche 61 bzw. 62 aus. Die Übergangsfläche 61 erstreckt sich bis zum Ende der Spannzange 38. Die Übergangsfläche 62 erstreckt sich bis zu der Querschnittsebene, an der die weiter außen gelegene Übergangsfläche 59 endet, so daß dort zwischen ihnen eine mehr oder minder ebene kreisringförmige Übergangsfläche entsteht.

Die Spannzange 38 weist auf ihrer Außenseite zwei zylindrische Führungsflächen 63 und 64 und zwei kegelstumpfförmige Führungsflächen 65 und 66 auf (Fig. 1). Die zylindrischen Führungsflächen 63 und 64 haben untereinander den gleichen Außenhalbmesser. Je eine der kegelstumpfförmigen Führungsflächen 65 und 66 schließt an der vom Werkzeugkopf 22 abgekehrten Seite an eine der zylindrischen Führungsflächen 63 bzw. 64 an, wobei sie sich von dort aus verjüngt. Die Flächennormale der kegelstumpfförmigen Führungsflächen 65 und 66 haben demnach eine radial auswärts gerichtete Komponente und eine vom Werkzeugkopf 22 weg gerichtete axiale Komponente. Die Flächennormale beider kegelstumpfförmiger Führungsflächen 65 und 66 sind untereinander parallel ausgerichtet. Die Halbmesserdifferenz ist bei beiden kegelstumpfförmigen Führungsflächen zumindest annähernd gleich groß und dabei zugleich größer als die Halbmesserdifferenz der Kupplungsflächen 51 und 52 am Spannbolzen 37. Am kleineren Halbmesser der kegelstumpfförmigen Führungsflächen 65 und 66 schließt je eine zylindrische Übergangsfläche 67 bzw. 68 an. Die Übergangsfläche 67 erstreckt sich bis zum Anfang der benachbarten zylindrisch Führungsfläche 64. Die Übergangsfläche 68 erstreckt sich bis zum Ende der Spannzange 38 hin.

Für jede der äußeren Führungsflächen 63 ... 66 an der Spannzange 38 ist, als Teil der Spannvorrichtung 31, am Werkzeughalter 21 je eine darauf abgestimmte innere Führungsfläche vorhanden. Diese sind an einem hülsenförmigen Führungsteil 69 des Werkzeughalters 21 angeordnet, der in nicht dargestellter Weise mit dem rohrförmig erscheinenden Hauptteil 70 des Werkzeughalters 21 verbunden ist, an dessen vorderem Ende sich die Führungs- und Anlagefläche 26 befindet.

Diese inneren Führungsflächen sind zwei zylindrische Führungsflächen 71 und 72 und zwei kegelstumpfförmige Führungsflächen 73 und 74. Die zylindrischen Führungsflächen 71 und 72 haben untereinander den gleichen Innendurchmesser, der zumindest annähernd gleich dem doppelten Außenhalbmesser der äußeren zylindrischen Führungsflächen 63 und 64 an der Spannzange 38 ist. Von den kegelstumpfförmigen Führungsflächen 73 und 74 schließt je eine an der dem Werkzeugkopf 22 zugekehrten Seite an je eine der zylindrischen Führungsflächen 71 und 72 an, von wo aus sie sich erweitern. Ihre Flächennormale die untereinander parallel ausgerichtet sind, haben zumindest annähernd die entgegengesetzte Ausrichtung wie die Flächennormale der äußeren kegelstumpfförmigen Führungsflächen 65 und 66 an der Spannzange 38. Die inneren kegelstumpfförmigen Führungsflächen 73 und 74 am Führungsteil 69 haben eine Halbmesserdifferenz, die größer ist als die Halbmesserdifferenz der Kupplungsflächen 51 und 52 am Spannbolzen 37. Der kleinere Halbmesser der kegelstumpfförmigen Führungsflächen 73 und 74 ist ungefähr gleich groß wie der größere Halbmesser der kegelstumpfförmigen äußeren Führungsflächen 65 und 66 an der Spannzange 38.

An die kegelstumpfförmige Führungsfläche 74 schließt eine zylindrische Übergangsfläche 55 an, die sich in Richtung zum Werkzeugkopf 22 hin bis zu der Querschnittsebene erstreckt, an der die zylindrische Führungsfläche 71 beginnt.

An dem Führungsteil 69 haben die Übergangsstellen zwischen je einer der inneren zylindrischen Führungsflächen 71 und 72 und der ihr zugehörigen, an ihr anschließenden kegelstumpfförmigen Führungsfläche 73 bzw. 74 den gleichen axialen Abstand, den an der Spannzange die Übergangsstellen zwischen je einer der äußeren zylindrischen Führungsflächen 63 und 64 und der ihr zugehörigen, an sie anschließenden kegelstumpfförmigen Führungsfläche 65 bzw. 66 haben. Dadurch werden bei einer Axialbewegung der Spannzange 38 ihre Spannbacken 55 stets parallel zu sich selbst bewegt, sei es entlang der zylindrischen Führungsflächen oder sei es entlang der kegelstumpfförmigen Führungsflächen.

Die Spannzange 38 weist an dem vom Werkzeugkopf 22 abgekehrten Ende in ihrem Inneren eine kreisringförmige Anlagefläche 76 auf, die dem Werkzeugkopf 22 zugekehrt ist. Diese Anlagefläche 76 ist rechtwinklig zur gemeinsamen Achse 32 ausgerichtet. Diese Anlagefläche bildet einen Teil der Zugvorrichtung 39.

Als weiterer Teil der Zugvorrichtung ist eine Zugstange 77 vorhanden, die mit einem nicht dargestellten Kraftantrieb verbunden ist oder verbindbar ist. Die Zugstange 77 ist mittig zur gemeinsamen Achse 32 angeordnet. Sie erstreckt sich bis in den Innenraum der Spannzange 38 hinein. Die Zugstange 77 ist an ihrem in den Innenraum der Spannzange 38 hineinragenden Ende mit einem Zugkopf 78 versehen, der eine vom Werkzeugkopf 22 abgekehrte ebene kreisringförmige Anlagefläche 79 aufweist. Diese Anlagefläche 79 am Zugkopf 78 und die ihm zugekehrte Anlagefläche 76 an der Spannzange 38 liegen in jeder Stellung der Spannzange 38 zumindest teilweise im gleichen Halbmesserbereich.

Die bisher beschriebenen Teile des Werkzeuges 20 wirken wie folgt zusammen:

Zum Lösen des Werkzeugkopfes 22 vom Werkzeughalter 21 wird die Zugstange 77 bis in ihre vordere Stellung in den Werkzeughalter 21 hineingeschoben (Fig. 2). Bei ihrer Bewegung dorthin wird, durch nicht dargestellte Mitnehmer, die Spannzange 38 in ihre aus Fig. 2 ersichtliche Lösestellung oder Freigabestellung geschoben. Dabei bewegen sich ihre Spannbacken zunächst mit ihren äußeren zylindrischen Führungsflächen 63 und 64 entlang der zylindrischen Führungsflächen 71 und 72 am Führungsteil 69. Dadurch entfernen sich die kegelstumpfförmigen Kupplungsflächen 57 und 58 der Spannzange in axialer Richtung von ihren Gegenflächen, den kegelstumpfförmigen Kupplungsflächen 51 und 52 am Spannbolzen 37. Im zweiten Abschnitt der axialen Bewegung der Spannzange 38 bewegen sich ihre Spannbacken 55 mit ihren kegelstumpfförmigen äußeren Führungsflächen 65 und 66 entlang der inneren kegelstumpfförmigen Führungsflächen 73 und 74 des Führungsteils 69 so weit vorwärts und zugleich radial auswärts, bis die zylindrischen Übergangsflächen 67 und 68 der Spannzange 38 an den zylindrischen Führungsflächen 71 und 72 des Führungsteils 69 anliegen. In diesem zweiten Abschnitt der Axialbewegung der Spannzange 38 werden ihre Spannbacken 55 durch die Federelemente 56 so weit auseinandergespreizt, daß ihre auf ihrer Innenseite gelegenen kegelstumpfförmigen Kupplungsflächen 57 und 58 außerhalb der axialen Bewegungsbahn der kegelstumpfförmigen Kupplungsflächen 51 und 52 des Spannbolzens 37 liegen. Dadurch kann der Spannbolzen 37 aus der Spannzange 38 und aus dem gesamten Werkzeughalter 21 in axialer Richtung frei herausgezogen werden. Dabei lösen sich auch die beiden Führungs- und Anlageflächen 26 und 27 voneinander. Sobald de Spannbolzen 37 ganz aus der Spannzange 38 ausgetreten ist, kann der Werkzeugkopf 22 vollständig wegbewegt werden.

Bei dem umgekehrten Bewegungsablauf zum Einspannen eines Werkzeugkopfes 22 wird dieser auf dem letzten Teil der Zuführbewegung möglichst mittig zur gemeinsamen Achse 32 in axialer Richtung auf den Werkzeughalter 21 zu bewegt, so daß sein vorauslaufender Spannbolzen 37 in den Innenraum der Spannzange 38 eintritt. Beim Erreichen der axialen Endstellung des Werkzeugkopfes 22 legt sich seine Führungs- und Anlagefläche 27 an der Fürungs- und Anlagefläche 26 des Werkzeughalters 21 an. Dadurch wird der Werkzeugkopf 22 gegenüber dem Werkzeughalter 21 zentriert. Diese Stellung des Werkzeugkopfes 22 ist aus Fig. 1 ersichtlich.

Durch Betätigen der Zugvorrichtung 39 wird die Zugstange 77 in axialer Richtung vom Werkzeugkopf 22 wegbewegt. Sie nimmt dabei die Spannzange 38 aus ihrer Löse- oder Freigabestellung (Fig. 2) in die Spannstellung (Fig. 1) mit. Dabei bewegen sich die Spannbacken 55 zunächst axial und zugleich radial einwärts, solange die kegelstumpfförmigen Führungsflächen 65 und 66 sowie 73 und 74 aneinander entlanggleiten. Dabei bewegen sich die kegelstumpfförmigen Kupplungsflächen 57 und 58 der Spannzange 38 entlang einer Kegelmantellinie auf die gemeinsame Achse 32 zu, bis sie sich im gleichen Halbmesssserbereich wie die Kupplungsflächen 51 und 52 am Spannbolzen 37 befinden. Dabei ist sowohl in axialer Richtung wie auch in radialerRichtung ein gewisses Spiel zwischen den verschiedenen Innenflächen der Spannzange 38 und den ihnen gegenüberliegenden Außenflächen des Spannbolzens 37. Im zweiten Abschnitt ihrer Spannbewegung bewegen sich die Spannbacken 55 rein axial so lange in Richtung auf ihre Spannstellung hin, bis ihre kegelstumpfförmigen Kupplungsflächen 57 und 58 sich an den Kupplungsflächen 51 und 52 des Spannbolzens 37 anlegen. Durch eine Steigerung der Zugkraft an der Zugstange 77 führen die Spannbacken 55 mit ihren Kupplungsflächen 57 und 58 auf den Kupplungsflächen 51 und 52 des Spannbolzens 37 eine kleine Relativbewegung in Richtung ihrer gemeinsamen Mantellinien aus, wodurch das radiale Spiel zwischen den äußeren zylindrischen Führungsflächen 63 und 64 der Spannbacken 55 und den inneren zylindrischen Führungsflächen 71 und 72 des Führungsteils 69 beseitigt wird und die Spannbacken 55 sowohl nach innen in Richtung auf den Spannbolzen 37 hin wie auch nach außen in Richtung auf den Führungsteil 69 hin eine radiale Spannkraftkomponente ausüben, die von einer axialen Spannkraftkomponente begleitet wird.

Im folgenden wird anhand Fig. 5 bis 8 ein weiteres Ausführungsbeispiel mit einer abgewandelten Spannvorrichtung erläutert.

Bei dem Werkzeug 120 sind der Werkzeughalter 121 und der Werkzeugkopf 122 auf die zuvor beschriebene Art mittels Führungs- und Anlageflächen in Form von Pyramidenflächen mit abgerundeten Kantenbereichen und mittels der Spannvorrichtung 123 miteinander gekuppelt.

Die Spannvorrichtung 123 weist einen Spannbolzen 124 und eine Spannzange 125 auf. Der Spannbolzen 124 ist in der beschriebenen Weise mit dem Werkzeugkopf 122 verbunden. Für die Kupplung mit der Spannzange 125 weist der Spannbolzen 124 ein zylindrisches Bolzengewinde 126 auf (Fig. 9). Die dem Werkzeugkopf 122 zugekehrte Gewindeflanke bildet die Kupplungsfläche 127 des Spannbolzens 124. Sie hat gegenüber der gemeinsamen Achse 128 einen Neigungswinkel, der zwischen 22,5° und 45°, bevorzugt bei zumindest annähernd 30°, liegt. Die andere Gewindeflanke hat einen größeren Neigungswinkel, beispielsweise von annähernd 3°, wie er bei Sägezahngewinde üblich ist. Die Kupplungsfläche 129 an der Spannzange 125 wird durch die vom Werkzeugkopf 122 abgekehrte Flanke eines zylindrischen Muttergewindes 130 gebildet, das auf das Bolzengewinde 126 des Spannbolzens 124 abgestimmt ist.

Die äußere Führungsfläche 131 der Spannzange 125 ist eine glatte Kreiszylinderfläche. Dementsprechend ist auch die innere Führungsfläche 132 am Werkzeughalter 121 eine glatte Kreiszylinderfläche.

Die Spannzange 125 ist mit einer Drehvorrichtung gekoppelt, die ihre Drehbewegung beispielsweise mittels der Zugstange 133 und deren Zugkopf 134 auf die Spannzange überträgt. Zu diesem Zweck sind am Zugkopf 134 Mitnehmerstifte 135 angeordnet, die in die Schlitze 136 zwischen je einander benachbarten Spannbacken 137 der Spannzange 125 eingreifen.

Eine als Werkzeug 120' gegenüber dem Werkzeug 120 zum Teil abgewandelte und zum Teil übereinstimmende Ausführungsform ist aus Fig. 7 und 8 ersichtlich, wobei die Fig. 5 weitgehend als zugehöriger Längsschnitt dienen kann. Gleiche Teile, die zumindest teilweise übereinstimmen und/oder teilweise abgewandelt sind, werden mit den gleichen Bezugszahlen bezeichnet, die zur Unterscheidung mit einem Apostroph versehen sind.

Am Spannbolzen 124' sind Längsnuten 141 vorhanden, die parallel zur gemeinsamen Achse 128 ausgerichtet sind. Sie erstrecken sich vom freien Ende des Spannbolzens 124' in Richtung auf den Werkzeugkopf 122 hin bis über den letzten Gewindegang des Bolzengewindes 126' hinaus. Der Nutgrund 142 dieser Längsnuten 141 hat von der gemeinsamen Achse 128 einen radialen Abstand, der kleiner als der halbe Kerndurchmesser des Bolzengewindes 126' ist. Die Längsnuten 141 sind am Umfang gleichmäßig verteilt angeordnet. Ihre Umfangserstreckung ist zumindest annähernd gleich der Gesamtumfangslänge geteilt durch die doppelte Anzahl der Längsnuten.

An der Innenseite der Spannzange 125' sind ebenfalls Längsnuten 143 vorhanden. Diese sind ebenfalls parallel zur gemeinsamen Achse 128 ausgerichtet. Sie erstrecken sich vom freien Ende der Spannzange 125 vom Werkzeugkopf 122 weg bis über den letzten Gewindegang des Bolzengewindes 126' am Spannbolzen 124' hinaus. Ihr Nutgrund 144 hat einen radialen Abstand von der gemeinsamen Achse 128, der größer als der Außenhalbmesser des Bolzengewindes 124' ist. Sie sind in der gleichen Weise gleichmäßig am Umfang verteilt wie die Längsnuten 142 am Spannbolzen 124'. Ihre Umfangserstreckung ist etwas größer als die Umfangserstreckung der zwischen den Längsnuten 141 am Spannbolzen 124 stehengebliebenen Umfangsabschnitte 145 des Bolzengewindes 126' mit den Kupplungsflächen 129'. Im Hinblick darauf, daß die Umfangs abschnitte 145 des Bolzengewindes 126' von einem kleineren Durchmesser ausgehen als die entsprechenden Umfangsabschnitte 146 des Muttergewindes 130', ist es von Vorteil, wenn die Längsnuten 142 am Spannbolzen 124 schmäler ausgeführt werden als die Längsnuten 143 an der Spannzange 125'. Dadurch wird die mechanische Belastbarkeit der Umfangsabschnitte 145 am Spannbozen 124' und der Umfangsabschnitte 146 an der Spannzange 125' etwa gleich groß.

An der Spannzange 125' liegen die Trennschlitze 136' im gleichen Umfangsbereich wie ihre Längsnuten 143, und zwar vorzugsweise in deren Mitte. Die als Federelement 147 für die Spannbacken 137' in den Schlitzen 136' angeordnete gummielastische Masse sollte nicht nach innen in die Längsnuten 143 überstehen. Die gummielastische Masse 136 muß hier keine größeren Radialbewegungen der Spannbacken mitmachen oder bewirken, wie das bei dem ersten Ausführungsbeispiel erforderlich war. Sie soll die einzelnen Spannbacken 137 zu der Spannzange 125 vereinigen und dafür sorgen, daß in der Lösestellung der Zugstange 133 und damit in der Lösestellung der Spannzange 125 deren Spannbacken 137 weder eine Radialkraft auswärts auf die innere Führungsfläche 132 am Werkzeughalter 121 hin noch eine Radialkraft einwärts auf den Spannbolzen 124 hin ausüben. Dadurch läßt die Spannzange 125 sich in axialer Richtung leicht verschieben und in Umfangsrichtung leicht drehen.

Um das Einscheren der Gewindegänge der Umfangsabschnitte 145 am Spannbolzen 126' in die Gewindelücken der Umfangsabschnitte 146 des Muttergewindes 130' zu erleichtern, kann eine aus Fig 9 bis 11 ersichtliche Leitvorrichtung 150 eingesetzt werden.

Sie weist eine Feder 151 auf (Fig. 5), die zwischen der vom Werkzeugkopf 122 abgekehrten Stirnseite 152 der Spannzange 125' und einer ihr axial gegenüberstehenden Stirnwand 153 des Werkzeughalters 121 angeordnet ist. Die Feder 151 ist vorzugsweise als Tellerfedersatz ausgebildet, dessen Tellerfedern auf der Zugstange 133 geführt werden. Die Leitvorrichtung 150 weist außerdem in der axialen Fluchtlinie jeder Längsnut 143 der Spannzange 125' je einen Anschlag 154 auf. Dieser ist in der Bewegungsbahn des mit den Kupplungsflächen 127' versehenen Teils des Spannbolzens 124' in axialer Richtung an derjenigen Stelle angeordnet, an der die nichttragende Gewindeflanke 155 des vordersten Gewindeganges des Bolzengewindes 126' gerade an dem Anschlag 154 anliegt, wenn die Umfangsabschnitte 145 der Gewindegänge am Spannbolzen 125' gerade mit den Lücken der Umfangsabschnitte 146 des Muttergewindes 130' fluchten. Dadurch fluchten auch die Kupplungsflächen 127' am Spannbolzen 125' und die Kuplungsflächen 129' an der Spannzange 125' miteinander. Durch eine Drehung der Spannzange 125' werden ihre Kupplungsflächen 129 und die Kupplungsflächen 127 am Spannbolzen 125' miteinander zur Deckung gebracht und damit in axialer Richtung eingekuppelt.

Jeder der Anschläge 154 wird durch einen Gewindestift 156 gebildet, der in eine Gewindebohrung einer Anschlagscheibe 157 eingeschraubt ist. Die Anschlagscheibe 157 hat eine Außenabmessung, die kleiner als der doppelte Innenhalbmesser des Muttergewindes 130' ist. Sie hat eine der Anzahl der Längsnuten 143 an der Spannzange 125' entsprechende Anzahl radialer Vorsprünge 158, an denen sich je eine der Gewindebohrungen für einen der Gwindestifte 156 befindet. Die Vorsprünge 158 haben eine radiale Erstreckung, die geringfügig größer als der Halbmesser der Innenfläche 159 ist, die an das Muttergewinde 130' anschließt. In unmittelbarer Nachbarschaft des innen gelegenen Endes des Muttergewindes 130' sind im Bereich der Schlitze 136' je eine Ausnehmung 160 vorhanden. Die axialen und tangentialen Abmessungen der Ausnehmungen 160 und der Vorsprünge 158 sind so aufeinander abgestimmt, daß die Vorsprünge 158 in die Ausnehmungen 160 hineinpassen und sich an deren Wandung in axialer Richtung anlegen können. Die radiale Überdeckung der Vorsprünge 158 und der Ausnehmungen 160 wird höchstens so groß gewählt, wie die Elastizität der zwischen den Spannbacken 137' befindlichen gummielastischen Masse aufgrund ihrer Elastizität das Auseinanderspreizen der Spannbacken 137' zuläßt. Wenn das im Einzelfall nicht ausreichen sollte, können an der Anschlag scheibe 157 anstelle der einstückig mit ihr ausgebildeten Vorsprünge 158 auch selbsthaltende Stifte wie Spannstifte oder Kerbstifte oder auch Gewindestifte in entsprechende radiale Bohrungen der Anschlagscheibe eingesetzt werden. Mit diesen ist dann ein größerer radialer Überdeckungsgrad möglich.

Die Leitvorrichtung 150 wirkt mit der Spannvorrichtung 123' in der Weise zusammen, daß nach dem Auftreffen der vordersten Gewindeflanke 155 oder der ihr einwärts benachbarten Stirnfläche des Spannbolzens 124' die Spannzange 125' entgegen der Kraft der Feder 155 etwas zurückgeschoben wird. Dabei bleiben ihre Kupplungsflächen 129' ständig in der tangentialen Fluchtlinie der Kupplungsflächen 127' des Spannbolzens 124'. Nach dem Einkuppeln der Kupplungsflächen 127' und 129' wird die Spannzange 125' zusammen mit dem Spannbolzen 124' von der Zugstange 133 vollends in die Spannstellung gezogen. Dabei gibt die verhältnismäßig schwache Feder 151 ausreichend weit nach.

Eine gegenüber der Spannvorrichtung 123' mit den Längsnuten 141 und 143 weiter abgewandelte Ausführungsform des Werkzeuges ergibt sich daraus, daß bei dieser mit 123'' bezeichneten Spannvorrichtung - bei sonst weitgehender Übereinstimmung der übrigen Merkmale - die Kupplungsflächen 127'' am Spannbolzen 124'' und die Kupplungsflächen 129'' an der Spannzange 125' nicht als Gewindeflanken sondern als Kegelstumpfflächen ausgebildet sind, die das gleiche Längsschnittprofil (Fig. 9) wie die Umfangsabschnitte 145 und 146 mit dem Bolzengewinde 126' bzw. mit dem Muttergewinde 130' haben. Die dort gemachten Ausführungen gelten hier dann entsprechend. Auch bei der Spannvorrichtung 123'' kann die Leitvorrichtung 150 vorteilhaft eingesetzt werden.

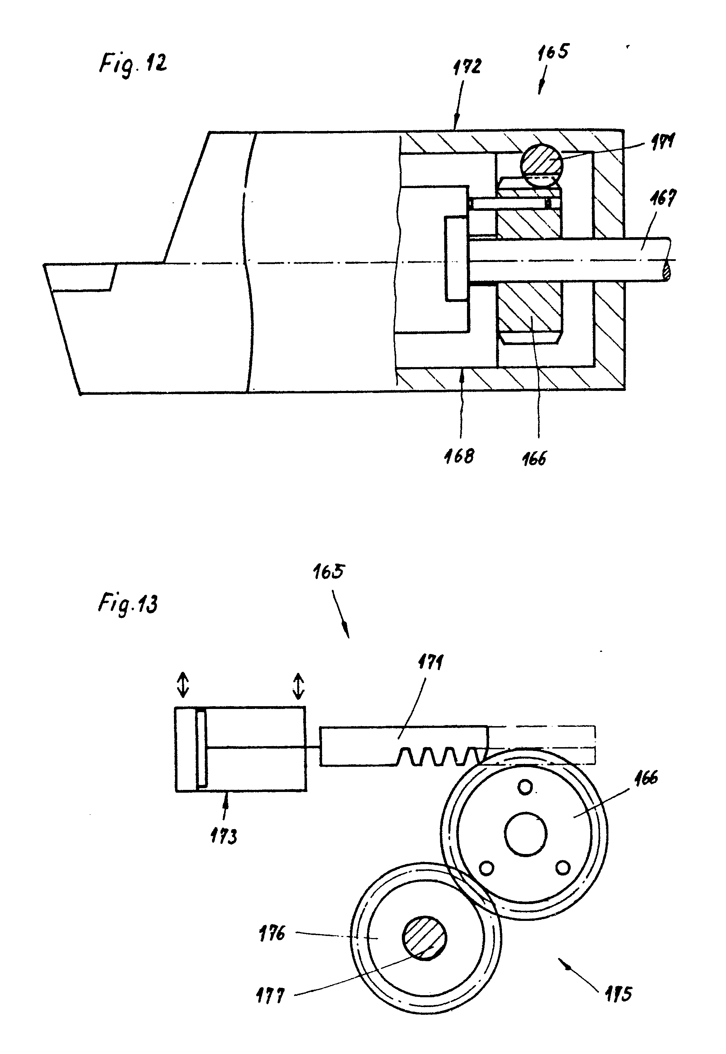

Aus Fig. 12 und 13 sind zwei unterschiedliche Drehvorrichtungen für das Verdrehen der Spannzange ersichtlich.

Bei der Ausführungsform nach Fig. 12 weist die Drehvorrichtung 165 ein Zahnrad 166 auf, das einfach auf der Zugstange 167 der betreffenden Spannvorrichtung drehbar gelagert ist. Das Zahnrad 166 ist in tangentialer Richtung mit der Spannzange 168 mittels mehrerer Kupplungsstifte 169 gekuppelt, die am Zahnrad 166 in axial ausgerichteten zylindrischen Durchgangslöchern sitzen und sich in axialer Richtung bis in die Schlitze zwischen zwei Spannbacken der Spannzange 168 hineinerstrecken. Parallel zu der Tangentialebene der Verzahnung des Zahnrades 166 ist eine Zahnstange 171 am Werkzeughalter 172 längsverschiebbar geführt. Die Zahnstange 171 ist innerhalb oder außerhalb des Werkzeughalters 172 mit einem linearen Verstellantrieb 173 gekoppelt, der beispielsweise als pneumatischer oder hydraulischer Kolbenantrieb ausgebildet ist. Stattdessen kommt aber auch ein Gewindespindelantrieb mit einem Drehmotor in Betracht.

Wenn die Zahnstange 171 in ihrer Ruhestellung außerhalb der Verzahnung des Zahnrrades 166 steht, können das Zahnrad 166 und die mit ihm drehfest verbundenen Teile entweder frei gedreht werden oder mittels einer anderen Drehvorrichtung in eine bestimmte Drehstellung gebracht werden. Nach dem Betätigen des Verstellantriebes 173 bewegt sich die Zahnstange 171 um eine bestimmte Wegstrecke, wobei sie in die Verzahnung des Zahnrades 166 eingreift und dieses um einen entsprechenden Drehwinkel verdreht. Wenn die Zahnstange 171 hingegen so ausgeführt und angeordnet ist, daß sie ständig mit dem Zahnrad 166 kämmt, dann kann dieses nicht mehr frei gedreht werden und vermag nur noch die von der Zahnstange 171 ausgelösten Drehbewegungen auszuführen.

Aus Fig. 13 ist noch eine zweite Drehvorrichtung 175 ersichtlich. Diese weist ein Zahnrad 176 auf, das ständig mit dem Zahnrad 166 kämmt, welches mit der zugehörigen Spannzange 168 drehfest gekoppelt ist. Das Zahnrad 176 ist über eine Welle 177 mit einem nicht dargestellten Drehantrieb verbunden, bei dessen Betätigung über das Zahnrad 176 und das Zahnrad 166 die Spannzange entweder um einen bestimmten Drehwinkel oder auch um mehrere Umdrehungen gedreht werden kann, wie das bei einer Spannvorrichtung erforderlich ist, bei der der Spannbolzen und die Spannzange mittels eines Gewindes miteinander gekuppelt werden.

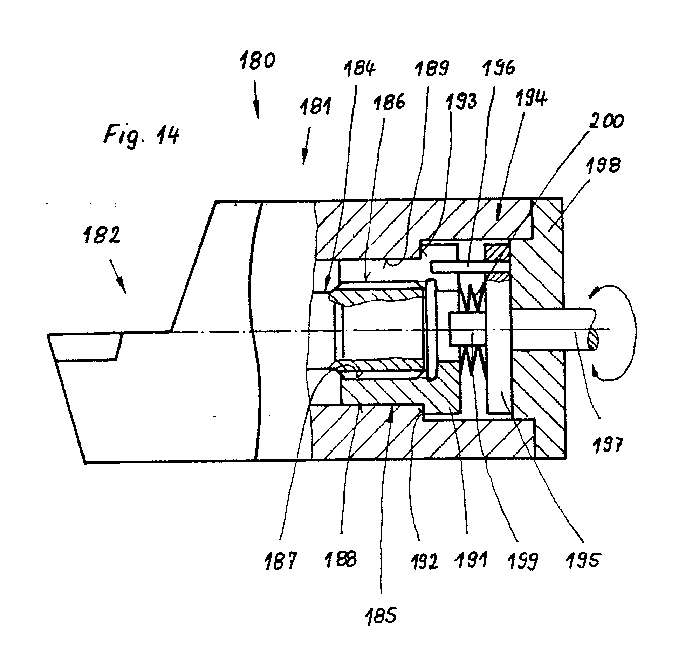

Bei dem aus Fig. 14 ersichtlichen Werkzeug 180 sind der Werkzeughalter 181 und der Werkzeugkopf 182 mittels einer der zuvor beschriebenen Arten von Führungs- und Anlageflächen in Form von Pyramidenstumpfflächen mit abgerundeten Kantenbereichen sowie mittels einer Spannvorrichtung 183 miteinander gekuppelt.

Die Spannvorrichtung 183 weist einen Spannbolzen 184 und eine Spannzange 185 auf. Der Spannbolzen 184 ist in der schon beschriebenen Weise mit dem Werkzeugkopf 182 verbunden. Für das Kuppeln mit der Spannzange 185 weist der Spannbolzen 184 ein zylindrisches Bolzengewinde 186 auf. Die dem Werkzeugkopf 182 zugekehrte Gewindeflanke bildet die Kupplungsfläche des Spannbolzens 184. Die Kupplungsfläche an der Spannzange 185 wird durch die vom Werkzeugkopf 182 abgekehrte Flanke eines zylindrischen Muttergewindes 187 gebildet, das auf das Bolzengewinde 186 des Spannbolzens 184 abgestimmt ist. Im einzelnen gelten hierfür die Darstellungen in Fig. 5, 6 und 9 und die zugehörige Beschreibung.

Die äußere Führungsfläche 188 der Spannzange 185 ist eine glatte Kreiszylinderfläche. Dementsprechend ist die innere Führungsfläche 189 am Werkzeughalter 181 ebenfalls eine glatte Kreiszylinderfläche.

Die Spannzange 185 weist an ihrem vom Werkzeugkopf 182 abgekehrten Ende einen ihre äußere Führungsfläche 188 in radialer Richtung überragenden kreisringförmigen Bund 191 auf. Die dem Werkzeugkopf 182 zugekehrte ebene kreisringförmige Stirnfläche des Bundes 191 bildet die axiale Anlagefläche 192 der Spannzange 185. Am Werkzeughalter 181 ist ein Absatz vorhanden, der an die innere Führungsfläche 189 nach außen hin anschließt. Seine vom Werkzeugkopf 182 abgekehrte ebene kreisringförmige Stirnfläche bildet die Anlagefläche 193 des Werkzeughalters 181 als Gegenfläche zur Anlagefläche 192 der Spannzange 185. Die Umfangsfläche des Bundes 191 hat ein ausreichendes radiales Spiel gegenüber dem Werkzeughalter 181.

Die Spannzange 185 ist mit einer Drehvorrichtung 194 gekoppelt. Sie weist eine Mitnehmerscheibe 195 auf, woran Mitnehmerelemente, etwa in Form von Mitnehmerstiften 196, angeordnet sind, die von der Mitnehmerscheibe 195 aus vorzugsweise in achsparalleler Ausrichtung sich bis in Ausnehmungen an der Spannzange 185 oder in die Schlitze zwischen ihren Spannbacken hinein erstrecken, wie es aus Fig 14 ersichtlich ist. Die Mitnehmerscheibe 195 sitzt drehfest auf einer Welle 197, die mit einem nicht dargestellten Drehantrieb gekoppelt ist oder koppelbar ist. Die Welle 197 ist an einem Deckel 198 des Werkzeughalters 181 gelagert.

Auf der der Spannzange 185 zugekehrten Seite der Mitnehmerscheibe 195 weist die Welle 197 einen Führungszapfen 199 auf, auf dem die einzelnen Tellerfedern eines Tellerfedersatzes 200 geführt sind, der sich einerseits an der Mitnehmerscheibe 195 und andererseits an der Spannzange 185 abstützt. Der Tellerfedersatz 200 ermöglicht es der Spannzange 185, in axialer Richtung etwas auszuweichen, wenn beim Einführen des Spannbolzens 184 der vorderste Gewindegang seines Bolzengewindes 186 nicht sofort in den ersten Gewindegang des Muttergewindes 187 der Spannzange 185 eingreifen kann und dies erst nach einer gewissen Drehbewegung der Spannzange 185 möglich ist.

## Ansprüche

1. Teilbares Werkzeug für die spanabhebende Bearbeitung mit folgenden Merkmalen:
   - Es ist ein Werkzeughalter (21) für die Befestigung an einer Werkzeugmaschine vorhanden,
   - es ist ein Werkzeugkopf (22) mit der Werkzeugschneide (23) vorhanden,
   - der Werkzeughalter (21) und der Werkzeugkopf (22) sind an einer Trennstelle (24) voneinander trennbar und
   - mittels einer Kupplungsvorrichtung (25) miteinander verbindbar,
   - die Kupplungsvorrichtung (25) weist aufeinander abgestimmte Führungs- und Anlageflächen (26, 27; 28, 29) auf, die teils am Werkzeughalter (21) und teils am Werkzeugkopf (22) mittig zu einer gemeinsamen Achse (32) angeordnet sind,
   - die Kupplungsvorrichtung (25) weist eine Spannvorrichtung (31) auf, die mittig zur gemeinsamen Achse (32) angeordnet ist,
   - die Spannvorrichtung (31) weist einen Spannbolzen (37) auf,
   - der mit dem Werkzeugkopf (22) verbunden ist, und
   - der mit einer oder mehreren Kupplungsflächen (51, 52) versehen ist, deren Flächennormale eine radial auswärts gerichtete Komponente und eine zum Werkzeugkopf (22) hin gerichtete axiale Komponente hat, wobei bei mehreren Kupplungsflächen (51, 52) zumindest ihre in der gleichen Axialebene gelegenen Flächennormalen untereinander parallel ausgerichtet sind,
   - die Spannvorrichtung (31) weist eine Spannzange (38) auf, die durch mehrere Längsschlitze in voneinander getrennte Spannbacken (55) unterteilt ist,
   - die Spannzange (38) ist im Werkzeughalter (22) untergebracht,
   - die Spannzange (38) ist auf ihrer Innenseite mit einer oder mehreren Kupplungsflächen (57, 58) versehen, deren Flächennormale die umgekehrte Ausrichtung wie die Flächennormale der Kupplungsflächen (51, 52) am Spannbolzen (37) hat, die mindestens in der Spannstellung zumindest teilweise in den gleichen axialen Abschnitten und im gleichen Halbmesserbereich wie die Kupplungsflächen (51, 52) am Spannbolzen (37) angeordnet sind und an diesen anliegen,
   - die Spannzange (38) ist auf ihrer Außenseite mit wenigstens einer äußeren Führungsfläche (65, 66) versehen,
   - die Spannzange (38) weist eine dem Werkzeugkopf (22) zugekehrte ebene kreisringförmige Anlagefläche (76) auf, deren Flächennormale parallel zur gemeinsamen Achse (32) ausgerichtet ist,
   - die Anlagefläche (76) ist an dem vom Werkzeugkopf (21) abgekehrten Ende im Inneren der Spannzange (38) angeordnet,
   - die Spannvorrichtung (31) weist eine mit einem Kraftantrieb verbindbare oder verbundene Zugstange (77) auf, die mittig zur gemeinsamen Achse (32) angeordnet ist und sich über die Anlagefläche (76) an der Spannzange (38) hinweg in den Innenraum der Spannzange (38) hinein erstreckt,

- die Zugstange (77) ist an ihrem in den Innenraum der Spannzange (38) hineinragenden Ende mit einem Zugkopf (78) versehen,
- der eine vom Werkzeugkopf (22) abgekehrte ebene kreisringförmige Anlagefläche (79) aufweist, die zumindest teilweise im gleichen Halbmesserbereich wie die Anlagefläche (76) der Spannzange (38) gelegen ist,
- die Spannvorrichtung (31) weist für jede äußere Führungsfläche (65, 66) an der Spannzange (38) eine innere Führungsfläche (73, 74) auf,
- die im Inneren des Werkzeughalters (21) an diesem oder an einem mit ihm verbundenen Teil (69) angeordnet ist,
- die zumindest in einem bestimmten Abschnitt des axialen Bewegungsbereiches der äußeren Führungsfläche (65, 66) der Spannzange (38) im gleichen Axialbereich angeordnet ist und
- deren Flächennormale die umgekehrte Ausrichtung wie die Flächennormale der äußeren Führungsfläche (65, 66) an der Spannzange (38) hat, **gekennzeichnet** durch folgende Merkmale:
- die Führungs- und Anlageflächen (26, 27) sind am Werkzeughalter (21) und am Werkzeugkopf (22) als aufeinander abgestimmte regelmäßige Pyramidenstumpfflächen (29, 29') mit abgerundeten Kantenbereichen (28, 28') ausgebildet, die zumindest annähernd im gleichen Halbmesserbereich gelegen sind,
- die Führungs- und Anlageflächen (26, 27) werden durch gerade Mantellinien gebildet werden, die mit einer normal zur gemeinsamen Achse (32) ausgerichteten Ebene (33) einen bestimmten Neigungswinkel einschließen, der um mindestens den Winkelwert des Reibungsbeiwertes ($\mu$) zwischen den beiden Führungs- und Anlageflächen (26, 27) von 90° verschieden ist.

2. Werkzeug nach Anspruch 1, **gekennzeichnet** durch das Merkmal :
- die Führungs- und Anlageflächen (26, 27) weisen drei zumindest anähernd gerade Flanken (29) und drei abgerundete Kantenbereiche (28) auf, deren Querschnittsgestalt durch eine Epizykloide oder durch eine Äquidistante dazu gebildet wird, bei der das Verhältnis des Halbmessers (r) des Planetenrades zum Halbmesser (R) des Grundrades 1 : 3 beträgt und bei der die Exzentrizität e =

$r^2/r + R$ ist.

3. Werkzeug nach Anspruch 1, **gekennzeichnet** durch das Merkmal :
- die Führungs- und Anlageflächen (26', 27') weisen vier zumindest annähernd gerade Flanken (29') und vier abgerundete Kantenbereiche (28') auf, bei denen vorzugsweise die Übergangsflächen zwischen den Flanken (29') und den Abrundungsflächen (28') ruckfrei ausgeführt sind.

4. Werkzeug nach einem der Ansprüche 1 bis 3, **gekennzeichnet** durch das Merkmal:
- von den beiden Führungs- und Anlageflächen ist die am Werkzeughalter (21) vorhandene Fläche (26, 26') als Innenfläche und die am Werkzeugkopf (22) vorhandene Fläche (27, 27') als Außenfläche ausgebildet.

5. Werkzeug nach einem der Ansprüche 1 bis 4, **gekennzeichnet** durch das Merkmal :
- die Führungs- und Anlageflächen (26, 27) sind auf einen kleinen Halbmesserbereich begrenzt, der an die in axialer Richtung anschließenden äußere oder innere Umfangsfläche (34, 35) des zugeordneten Werkzeugteils (21, 22) anschließt.

6. Werkzeug nach Anspruch 4 oder 5, **gekennzeichnet** durch das Merkmal:
- Die Mantellinien der Pyramidenstumpfflächen (26, 27 und 26', 27') und der abgerundeten Kantenbereiche (29, 29') schneiden sich zumindest annähernd im Axialbereich der vom Werkzeugkopf (22) am weitesten entfernten Kupplungsfläche (52) des Spannbolzens (37).

7. Werkzeug nach einem der Ansprüche 1 bis 6, **gekennzeichnet** durch folgende Merkmale:
- Die Kupplungsflächen (51, 52) am Spannbolzen (37) sind als Kegelstumpfflächen ausgebildet,
- diese Kupplungsflächen (51, 52) haben untereinander den gleichen Innendurchmesser und den gleichen Außendurchmesser,
- diese Kupplungsflächen (51, 52) haben einen bestimmten axialen Abstand untereinander,
- an den kleineren Durchmesser der Kupplungsflächen (51, 52) schließt eine kreiszylindrische Übergangsfläche (53, 54) an,
- die Kupplungsflächen (57, 58) an der Spannzange (38) sind - bezogen auf die gemeinsame Achse (32) - als Kegelstumpfflächen ausgebildet,

- diese Kupplungsflächen (57, 58) haben untereinander den gleichen Innenhalbmesser und den gleichen Außenhalbmesser, der geringfügig größer als die entsprechenden Maße der Kupplungsflächen (51, 52) am Spannbolzen (37) sind,
- diese Kupplungsflächen (57, 58) haben den gleichen axialen Abstand untereinander, den die Kupplungsflächen (51, 52) am Spannbolzen (37) haben,
- die Spannzange (38) hat zwei oder mehr äußere Führungsflächen (63, 64), die - bezogen auf die gemeinsame Achse - als Kreiszylinderflächen ausgebildet sind, die untereinander den gleichen Außenhalbmesser haben,
- an jede zylindrische Führungsfläche (63, 64) schließt an der vom Werkzeugkopf (22) abgekehrten Seite je eine kegelstumpfförmige Führungsfläche (65, 66) an, die sich von der zylindrischen Führungsfläche (63, 64) aus verjüngt, deren Flächennormale untereinander Parallel ausgerichtet sind und deren Halbmesserdifferenz mindestens gleich oder größer als die Halbmesserdifferenz der Kupplungsflächen (51, 52) am Spannbolzen (37) ist,
- an die kegelstumpfförmige Führungsfläche (65, 66) schließt eine Übergangsfläche (67, 68) an, die sich bis zum Anfang der benachbarten zylindrischen Führungsfläche (64) oder in Richtung auf das Ende der Spannzange (38) hin erstreckt und deren Außenhalbmesser nicht größer als der kleinste Halbmesser der kegelstumpfförmigen Führungsfläche (65, 66) ist,
- am Werkzeughalter (21) oder an dem mit ihm verbundenen Teil (69) sind zwei oder mehr innere Führungsflächen (71, 72) vorhanden, die als Kreiszylinderflächen ausgebildet sind, die untereinander den gleichen Innendurchmesser haben, der zumindest gleich dem doppelten Außenhalbmesser der äußeren Führungsflächen (63, 64) an der Spannzange (38) ist,
- an jede zylindrische Führungsfläche (71, 72) schließt an der dem Werkzeugkopf (22) zugekehrten Seite je eine kegelstumpfförmige Führungsfläche (73, 74) an, die sich von der zylindrischen Führungsfläche (71, 72) aus erweitert, deren Flächennormale untereinander parallel ausgerichtet sind und deren Halbmesserdifferenz mindestens gleich oder größer als die Halbmesserdifferenz der Kupplungsflächen (51, 52) am Spannbolzen (37) ist,

- die Übergangsstellen zwischen je einer äußeren zylindrischen Führungsfläche (63, 64) und der ihr zugehörigen kegelstumpfförmigen Führungsfläche (65, 66) an der Spannzange (38) haben untereinander den gleichen axialen Abstand, den die Übergangsstellen zwischen je einer inneren zylindrischen Führungsfläche (71, 72) und der ihr zugehörigen kegelstumpfförmigen Führungsfläche (73, 74) an dem betreffenden Teil (69) des Werkzeughalters (21) untereinander haben, und
- an die kegelstumpfförmige Führungsfläche (74) schließt eine Übergangsfläche (75) an, die sich bis zum Anfang der benachbarten inneren zylindrischen Führungsfläche (71), oder, soweit vorhanden, in Richtung auf das Ende des über die kegelstumpfförmige Führungsfläche (73) hinausragenden Längenabschnittes des Teils (69) des Werkzeughalters (21) hin erstreckt.

8.  Werkzeug nach einem der Ansprüche 1 bis 6, **gekennzeichnet** durch folgende Merkmale:
    - Die Kupplungsflächen (127") am Spannbolzen (124") sind als Kegellstumpfflächen ausgebildet,
    - diese Kupplungsflächen (127") haben untereinander den gleichen Innendurchmesser und den gleichen Außendurchmesser,
    - diese Kupplungsflächen (127"), deren Anzahl vorzugsweise zwei oder mehr beträgt, haben untereinander den gleichen axialen Abstand,
    - an den kleineren Durchmesser der Kupplungsflächen (127") schließt je eine Übergangsfläche (155") an, die sich bis zum Außendurchmesser der benachbarten Kupplungsfläche (127") hin erstreckt,
    - am Spannbolzen (124") sind Längsnuten (141") vorhanden, die paarallel zur gemeinsamen Achse (128) ausgerichtet sind, die vom freien Ende des Spannbolzens (124") ausgehen und sich in Richtung auf den Werkzeugkopf (122) hin bis mindestens zur letzten Kupplungsfläche (127") hin oder darüber hinaus erstrekken, deren Nutgrund (142") einen radialen Abstand von der gemeinsamen Achse (128) hat, der höchstens gleich oder kleiner als der kleine Halbmesser der Kupplungsflächen (127") am Spannbolzen (124") ist, die am Umfang gleichmäßig verteilt angeordnet sind und die eine Umfangserstreckung haben, die zumindest annähernd gleich der durch die doppelte Anzahl der Längsnuten (141") geteilte Gesamtumfangsfläche oder geringfügig kleiner ist,

- die Kupplungsflächen (129") an der Spannzange (125") sind - bezogen auf die gemeinsame Achse (128) - als Kegelstumpfflächen ausgebildet,
- diese Kupplungsflächen (129") haben untereinander den gleichen Innenhalbmesser und den gleichen Außenhalbmesser, die geringfügig größer als die entsprechenden Maße der Kupplungsflächen (127") am Spannbolzen (124' ') sind,
- diese Kupplungsflächen (129") haben untereinander den gleichen axialen Abstand, den die Kupplungsflächen (127") am Spannbolzen (124") untereinander haben,
- an der Innenseite der Spannzange (125") sind Längsnuten (143") vorhanden, die parallel zur gemeinsamen Achse (128) ausgerichtet sind, die von dem dem Werkzeugkopf (122) zugekehrten freien Ende der Spannzange (125") ausgehen und sich in Richtung auf die stirnseitige Anlagefläche für den Zugkopf (134) hin bis mindestens zu der in der Spannstellung am weitesten in die Spannzange (125") eingedrungene Kupplungsfläche (127") des Spannbolzens (124") und einer etwa daran anschließenden Übergangsfläche (155") hin oder darüber hinaus erstrecken, deren Nutgrund (144") in der Spannstellung einen radialen Abstand von der gemeinsamen Achse (128) hat, der mindestens gleich oder größer als der Außenhalbmesser der Kupplungsflächen (127") am Spannbolzen (124") ist, die am Umfang gleichmäßig verteilt angeordnet sind und die eine Umfangserstreckung haben, die mindestens gleich oder größer als die Umfangserstreckung der zwischen den Längsnuten (141") am Spannbolzen (124") stehen gebliebenen Kupplungsflächen (145") ist,
- die äußere Führungsfläche (131") der Spannzange (125") ist - bezogen auf die gemeinsame Achse (128) - eine Kreiszylinderfläche,
- die Spannzange (125") ist mit einer Drehvorrichtung gekoppelt oder koppelbar,
- die innere Führungsfläche (132) am Werkzeughalter (122) oder an einem mit ihm verbundenen Teil ist als Kreiszylinderfläche ausgebildet, deren Innendurchmesser zumindest annähernd gleich dem doppelten Außenhalbmesser der Spannzange (125") ist.

9. Werkzeug nach einem der Ansprüche 1 bis 6, **gekennzeichnet** durch folgende Merkmale:
   - Die Kupplungsfläche (127) am Spannbolzen (124) wird durch die dem Werkzeugkopf (122) zugekehrte Flanke eines zylindrischen Bolzengewindes (126) gebildet, das eine bestimmte Gewindesteigung hat und dessen tragende Flanke einen bestimmten Neigungswinkel gegenüber der gemeinsamen Achse (128) hat,
   - die Kupplungsfläche (129) an der Spannzange (125) wird durch die vom Werkzeugkopf (122) abgekehrte Flanke eines zylindrischen Muttergewindes gebildet, das auf das Bolzengewinde (126) des Spannbolzens (124) abgestimmt ist,
   - die äußere Führungsfläche (131) der Spannzange (125) ist - bezogen auf die gemeinsame Achse (128) - eine Kreiszylinderfläche,
   - die Spannzange (125) ist mit einer Drehvorrichtung gekoppelt oder koppelbar,
   - die innere Führungsfläche (132) am Werkzeughalter (121) oder an einem mit ihm verbundenen Teil ist als Kreiszylinderfläche ausgebildet, deren Innendurchmesser zumindest annähernd gleich dem doppelten Außenhalbmesser der Spannzange (125) ist.

10. Werkzeug nach Anspruch 9, **gekennzeichnet** durch die Merkmale:
    - Am Spannbolzen (124') sind Längsnuten (142) vorhanden, die parallel zur gemeinsamen Achse ausgerichtet sind, die vom freien Ende des Spannbolzens (124') ausgehen und sich in Richtung auf den Werkzeugkopf (122) hin bis mindestens zum letzten Gewindegang hin oder darüber hinaus erstrecken, deren Nutgrund (142) einer radialen Abstand von der gemeinsamen Achse (128) hat, der höchstens gleich oder kleiner
    - als der halbe Kerndurchmesser des Bolzengewindes (126') ist, die am Umfang gleichmäßig verteilt angeordnet sind und die eine Umfangserstreckung haben, die zumindest annähernd gleich der durch die doppelte Anzahl der Längsnuten (141) geteilte Gesamtumfangslänge oder geringfügig kleiner ist,

- an der Innenseite der Spannzange (125) sind Längsnuten (143) vorhanden, die parallel zur gemeinsamen Achse (128) ausgerichtet sind, die von dem dem Werkzeugkopf (122) zugekehrten freien Ende der Spannzange (125') ausgehen und sich in Richtung auf die stirnseitige Anlagefläche für den Zugkopf (134) hin bis mindestens zu dem in der Spannstellung am weitesten in die Spannzange (125') eingedrungenen Gewindegang des Spannbolzens (124') hin oder darüber hinaus erstrecken, deren Nutgrund (144) in der Spannstellung einen radialen Abstand von der gemeinsamen Achse (128) hat, der mindestens gleich oder größer als der Außenhalbmesser des Bolzengewindes (126') am Spannbolzen (124') ist, die am Umfang gleichmäßig verteilt angeordnet sind und die eine Umfangserstreckung haben, die mindestens gleich oder größer als die Umfangserstreckung der zwischen den Längsnuten (141) am Spannbolzen (124') stehen gebliebenen Kupplungsflächen (129') ist.

11. Werkzeug nach Anspruch 7,
    **gekennzeichnet** durch das Merkmal:
    - An der Spannzange (38) sind die äußeren zylindrischen Führungsflächen (63, 64) und die innen gelegenen Kupplungsflächen (57, 58) wenigstens zum Teil oder alle paarweise in je der gleichen Querschnittsebene angeordnet, wobei im
    - erstgenannten Fall bevorzugt diejenige Kupplungsfläche (58), die mit der am Spannbolzen (37) dem Ende am nächsten gelegene Kupplunsfläche (52) zusammenwirkt, und die ihr zugeordnete zylindrische Führunsfläche (64) paarweise in der gleichen Querschnittsebene angeordnet sind.

12. Werkzeug nach einem der Ansprüche 7 bis 11,
    **gekennzeichnet** durch das Merkmal:
    - Die Kupplungsfläche (51, 52) am Spannbolzen (37) hat einen Kegelstumpfwinkel, der zwischen 45° und 90°, bevorzugt bei 60°, liegt.

13. Werkzeug nach einem der Ansprüche 9 oder 10,
    **gekennzeichnet** durch das Merkmal:
    - Das Bolzengewinde (126) ist nach Art eines Sägezahngewindes ausgebildet, bei dem die tragende Flanke (127) gegenüber der gemeinsamen Achse (128) einen Neigungswinkel hat, der zwischen 22,5° und 45°, bevorzugt bei 30°, liegt und bei dem die nichttragende Flanke (155) mit der gemeinsamen Achse (128) einen Winkel von zumindest annähernd 90° einschließt.

14. Werkzeug nach einem der Ansprüche 8, 10, 12 oder 13,
    **gekennzeichnet** durch die Merkmale:
    - An der vom Werkzeugkopf (122) abgekehrten Stirnseite (152) der Spannzange (125') ist eine Feder (151) aneordnet, die sich in der vom Werkzeugkopf (122) abgekehrten Richtung an einem Teil (152) des Werkzeughalters (121) abstützt und die so ausgelegt ist, daß sie in der Spannstellung der Spannzange (125') auf diese eine Kraft in Richtung auf den Werkzeugkopf (122) hin ausübt,
    - die Feder (151) wird bevorzugt durch einen Satz Tellerfedern gebildet, die vorzugsweise auf der Zugstange (133) geführt sind,
    - an der Innenseite der Spannzange (125') ist in mindestens einer, bevorzugt in jeder, ihrer Längsnuten (143) oder in deren axialer Fluchtlinie ein Anschlag (154) vorhanden, der in der Bewegungsbahn des mit den Kupplungsflächen (127') versehenen Teils des Spannnbolzens (125') in axialer Richtung an derjenigen Stelle angeordnet ist, an der die an die vorderste Kupplunsfläche (127') des Spannbolzens (125') anschließende stirnseitige Übergangsfläche (155') gerade an dem Anschlag (154) anliegt, wenn die Kupplungsflächen (127') des Spannbolzens (125') und die Kupplungsflächen (129') der Spannzange (125') in Umfangsrichtung zumindest annähernd miteiander fluchten.

15. Teilbares Werkzeug für die spanabhebende Bearbeitung mit folgenden Merkmalen :
    - Es ist ein Werkzeughalter (181) für die Befestigung an einer Werkzeugmaschine vorhanden,
    - es ist ein Werkzeugkopf (182) mit der Werkzeugschneide vorhanden,
    - der Werkzeughalter (181) und der Werkzeugkopf (182) sind an einer Trennstelle voneinander trennbar und
    - mittels einer Kupplungsvorrichtung miteinander verbindbar,
    - die Kupplungsvorrichtung weist aufeinander abgestimmte Führungs- und Anlageflächen auf, die teils am Werkzeughalter (181) und teils am Werkzeugkopf (182) mittig zu einer gemeinsamen Achse angeordnet sind,

- die Kupplungsvorrichtung weist eine Spannvorrichtung (183) auf, die mittig zur gemeinsamen Achse angeordnet ist,
- die Spannvorrichtung (183) weist einen Spannbolzen (184) auf,
- der mit dem Werkzeugkopf (182) verbunden ist, und
- der mit einer oder mehreren Kupplungsflächen (186) versehen ist, deren Flächennormale eine radial auswärts gerichtete Komponente und eine zum Werkzeugkopf (182) hin gerichtete axiale Komponente hat, wobei bei mehreren Kupplungsflächen zumindest ihre in der gleichen Axialebene gelegenen Flächennormalen untereinander parallel ausgerichtet sind,
- die Spannvorrichtung (183) weist eine Spannzange (185) auf, die durch mehrere Längsschlitze in voneinander getrennte Spannbacken unterteilt ist,
- die Spannzange (185) ist im Werkzeughalter (181) untergebracht,
- die Spannzange (185) ist auf ihrer Innenseite mit einer oder mehreren Kupplungsflächen (187) versehen, deren Flächennormale die umgekehrte Ausrichtung wie die Flächennormale der Kupplungsflächen (186) am Spannbolzen (184) hat, die mindestens in der Spannstellung zumindest teilweise in den gleichen axialen Abschnitten und im gleichen Halbmesserbereich wie die Kupplungsflächen (186) am Spannbolzen (184) angeordnet sind und an diesen anliegen,
- die Spannzange (185) ist auf ihrer Außenseite mit wenigstens einer äußeren Führungsfläche (188) versehen,
- Die Spannzange (185) weist eine dem Werkzeugkopf (182) zugekehrte, zumindest abschnittweise kreisringförmige Anlagefläche (192 auf, deren Flächennormale parallel zur gemeinsamen Achse ausgerichtet ist,
- die Spannvorrichtung (183) weist für jede äußere Führungsfläche (188) an der Spannzange (185) ine innere Führungsfläche (189) auf,
- die im Inneren des Werkzeughalters (181) an diesem oder an einem mit ihm verbundenen Teil angeordnet ist,
- die zumindest in einem bestimmten Abschnitt des axialen Bewegungsbereiches der äußeren Führungsfläche (188) der Spannzange (185) im gleichen Axialbereich angeordnet ist und

- deren Flächennormale die umgekehrte Ausrichtung wie die Flächennormale der äußeren Führungsfläche (188) an der Spannzange (185) hat, **gekennzeichnet** durch folgende Merkmale:

- die Führungs- und Anlageflächen sind am Werkzeughalter (185) und am Werkzeugkopf (182) als aufeinander abgestimmte regelmäßige Pyramidenstumpfflächen mit abgerundeten Kantenbereichen ausgebildet, die zumindest annähernd im gleichen Halbmesserbereich gelegen ind und die durch gerade Mantellinien gebildet werden, die mit einer normal zur gemeinsamen Achse ausgerichteten Ebene einen bestimmten Neigungswinkel einschließen, der um mindestens den Winkelwert des Reibungsbeiwertes zwischen den beiden Führungs- und Anlageflächen von 90° verschieden ist,
- die Kupplungsfläche am Spannbolzen (184) wird durch die dem Werkzeugkopf (182) zugekehrte Flanke eines zylindrischen Bolzengewindes (186) gebildet, das eine bestimmte Gewindesteigung hat und dessen tragende Flanke einen bestimmten Neigungswinkel gegenüber der gemeinsamen Achse hat,
- die Kupplungsfläche an der Spannzange (185) wird durch die vom Werkzeugkopf (182) abgekehrte Flanke eines zylindrischen Muttergewindes (187) gebildet, das auf das Bolzengewinde (186) des Spannbolzens (184) abgestimmt ist,
- die äußere Führungsfläche (188) der Spannzange (185) ist - bezogen auf die gemeinsame Achse - eine Kreiszylinderfläche,
- die Spannzange (185) ist mit einer Drehvorrichtung (194) gekoppelt oder koppelbar,
- die Anlagefläche (192) der Spannzange (185) ist an ihrer Außenseite angeordnet,
- die innere Führungsfläche (189) am Werkzeughalter (181) oder an einem mit ihm verbundenen Teil ist als Kreiszylinderfläche ausgebildet, deren Innendurchmesser zumindest annähernd gleich dem doppelten Außenhalbmesser der Spannzange (185) ist,
- die Spannvorrichtung (183) weist eine am Werkzeughalter (181) oder an einem mit ihm verbundenen Teil angeordnete Anlagefläche (193) auf, die als Gegenfläche zur Anlagefläche (192) an der Spannzange (185) auf diese abgestimmt ist.

**16.** Werkzeug nach einem der Ansprüche 8 bis 10 oder 12 bis 15,
**gekennzeichnet** durch die Merkmale:
- Die Drehvorrichtung (165; 194) weist ein Zahnrad (166) oder eine Mitnehmerscheibe 195) auf, das vorzugsweise auf der Zugstange (167) oder das bzw. die am Werkzeughalter (181) oder an einem mit ihm verbundenen oder an ihm geführten Teil (197) gelagert ist, und das bzw. die mit der Spannzange (168; 185) in tangentialer Richtung gekoppelt ist, ist, vorzugsweise mittels eines oder mehrerer axial ausgerichteter Stifte (169), die in Ausnehmungen und/oder in die Schlitze der Spannzange (168) eingreifen,
- die Drehvorrichtung weist eine Zahnstange (171) auf, die die gemeinsame Achse (128) kreuzt, die mit dem Zahnrad (166) kämmt und die mit einem linearen Kraftantrieb (173 gekoppelt ist, oder
- die Drehvorrichtung (175) weist ein zweites Zahnrad (176) auf, das mit dem ersten Zahnrad (166) kämmt, und das mit einem Drehantrieb (177) gekoppelt ist, oder
- die Drehvorrichtung (194) weist einen Drehantrieb auf, der mit der Mitnehmerscheibe (195) gekoppelt ist oder koppelbar ist.

**17.** Werkzeug nach einem der Ansprüche 5 bis 16,
**gekennzeichnet** durch die Merkmale:
- Der Spannbolzen (37) weist an der Verbindungsstelle mit dem Werkzeugkopf (22) eine kegelstumpfförmige Führungs- und Anlagefläche (41) auf, die bevorzugt in einem gewissen Abstand vom Ende des Spannbolzens 837) angeordnet ist, und die bevorzugt aan einem Bund (42) des Spannbolzens (37) angeordnet ist,
- der Werkzeugkopf (22) weist an der Verbindungsstelle mit dem Spannbolzen (37) eine kegelstumpfförmige Führungs- und Anlagefläche (45) auf, die auf die zugeordnete Führungs-und Anlageläche (41) am Spannbolzen abgestimmt ist.

**18.** Werkzeug nach Anspruch 17,
**gekennzeichnet** durch die Merkmale:
- der Spannbolzen (37) weist an dem dem Werkzeugkopf (22) zugekehrten Ende eine zylindrische Führungsfläche (44) auf,
- der Werkzeugkopf (22) weist eine zylindrische Führungsfläche (47) auf, die auf die zylindrische Führungsfläche (44) am Ende des Spannbolzens (37) abgestimmt ist.

**19.** Werkzeug nach Anspruch 17 oder 18,
**gekennzeichnet** durch die Merkmale:
- Der Spannbolzen (37) weist an der Verbindungsstelle mit dem Werkzeugkopf (22) ein Schraubengewinde (43) auf, das bevorzugt als Sägezahngewinde ausgebildet ist, dessen annähernd rechtwinklig zur gemeinsamen Achse 832) ausgerichtete Gewindeflanke vom Werkzeugkopf (22) abgekehrt ist,
- das Schraubengewinde (43) ist zwischen der kegelstumpfförmigen Anlage- und Führungsfläche (41) und dem Ende des Schraubenbolzens bzw., soweit vorhanden, der zylindrischen Führungsfläche (44) am Ende des Spannbolzens angeordnet,
- der Werkzeugkopf (22) weist ein Muttergewinde (46) auf, das auf das Schraubengewinde (43) am Spannbolzen (37) abgestimmt ist.

## Claims

**1.** Dividable tool for cutting, having the following features:
- a tool holder (21) for securing to a machine tool is provided,
- a tool head (22) having the tool tip (23) is provided,
- the tool holder (21) and the tool head (22) are separable from one another at a separation point (24) and
- may be connected to one another by means of a coupling apparatus (25),
- the coupling apparatus (25) has guide and bearing surfaces (26, 27; 28, 29) matched to one another, some of which are arranged on the tool holder (21) and some of which are arranged on the tool head (22) central with respect to a common axis (32),
- the coupling apparatus (25) has a clamping apparatus (31) which is arranged central with respect to the common axis (32),
- the clamping apparatus (31) has a clamping bolt (37)
- which is connected to the tool head (22) and
- which is provided with one or more coupling surfaces (51, 52) whose surface normal has a radially outwardly directed component and an axial component directed towards the tool head (22), in the case of a plurality of coupling surfaces (51, 52) at least their surface normals lying in the same axial plane being aligned parallel to one another,

- the clamping apparatus (31) has a clamping clip (38) divided by a plurality of longitudinal slots into mutually separated clamping jaws (55),
- the clamping clip (38) is accommodated in the tool holder (22),
- the clamping clip (38) is provided on its inside with one or more coupling surfaces (57, 58) whose surface normal has the opposite alignment to the surface normal of the coupling surfaces (51, 52) on the clamping bolt (37), which are arranged at least in the clamped position at least partially in the same axial sections and in the same radius range as the coupling surfaces (51, 52) on the clamping bolt (37) and which bear against these,
- the clamping clip (38) is provided on its outside with at least one external guide surface (65, 66),
- the clamping clip (38) has a planar annular bearing surface (76) which faces the tool head (22) and whose surface normal is aligned parallel to the common axis (32),
- the bearing surface (76) is arranged on the end remote from the tool head (21) in the interior of the clamping clip (38),
- the clamping apparatus (31) has a tension bar (77) connectable or connected to a power drive and arranged central with respect to the common axis (32) and extending beyond the bearing surface (76) on the clamping clip (38) into the interior space of the clamping clip (38),
- the tension bar (77) is provided at its end projecting into the interior space of the clamping clip (38) with a draw head (78)
- which has a planar annular bearing surface (79) which is remote from the tool head (22) and which is at least partially in the same radius range as the bearing surface (76) of the clamping clip (38),
- the clamping apparatus (31) has for each external guide surface (65, 66) on the clamping clip (38) an inner guide surface (73, 74)
- which is arranged in the interior of the tool holder (21) on the latter or on a part (69) connected thereto,
- which is arranged at least in a particular section of the axial range of movement of the outer guide surface (65, 66) of the clamping clip (38) in the same axial range and

- whose surface normal has the opposite alignment to the surface normal of the outer guide surface (65, 66) on the clamping clip (38), characterised by the following features:
- the guide and bearing surfaces (26, 27) are constructed on the tool holder (21) and on the tool head (22) as regular truncated pyramidal surfaces (29, 29') matched to one another, with rounded-off edge regions (28, 28'), lying at least approximately in the same radius range,
- the guide and bearing surfaces (26, 27) are formed by rectilinear generatrices which with a plane (33) aligned normal to the common axis (32) enclose a particular angle of inclination which differs by at least the value of the angle of the coefficient of friction ($\mu$) between the two guide and bearing surfaces (26, 27) of $90°$.

2. Tool according to Claim 1, characterised by the feature:
   - the guide and bearing surfaces (26, 27) have three at least approximately rectilinear flanks (29) and three rounded-off edge regions (28) whose cross-sectional shape is formed by an epicycloid or a line equidistant thereto, in which the ratio of the radius (r) of the planet wheel to the radius (R) of the main wheel is 1:3 and in which the eccentricity $e = r^2/r + R$.

3. Tool according to Claim 1, characterised by the feature:
   - the guide and bearing surfaces (26', 27') have four at least approximately rectilinear flanks (29') and four rounded-off edge regions (28') in which preferably the transition surfaces between the flanks (29') and the rounded-off surfaces (28') are of smooth construction.

4. Tool according to one of Claims 1 to 3, characterised by the feature:
   - of the two guide and bearing surfaces, the surface (26, 26') on the tool holder (21) is constructed as the inner surface and the surface (27, 27') on the tool head (22) is constructed as the outer surface.

5. Tool according to one of Claims 1 to 4, characterised by the feature:
   - the guide and bearing surfaces (26, 27) are limited to a small radius range which adjoins the outer or inner peripheral surface (34, 35), adjoining in the axial direction, of the associated tool part (21, 22).

6. Tool according to Claim 4 or 5, characterised by the feature:
   - the generatrices of the truncated pyramidal surfaces (26, 27 and 26', 27') and of the rounded-off edge regions (29, 29') intersect at least approximately in the axial region of the coupling surface (52) of the clamping bolt (37) which is furthest from the tool head (22).

7. Tool according to one of Claims 1 to 6, characterised by the following features:
   - the coupling surfaces (51, 52) on the clamping bolt (37) are constructed as frustoconical surfaces,
   - these coupling surfaces (51, 52) have the same internal diameter and the same external diameter as each other,
   - these coupling surfaces (51, 52) have a particular axial spacing from one another,
   - adjoining the smaller diameter of the coupling surfaces (51, 52) is a cylindrical transition surface (53, 54),
   - the coupling surfaces (57, 58) on the clamping clip (38) are, with reference to the common axis (32), constructed as frustoconical surfaces,
   - these coupling surfaces (57, 58) have the same internal radius and the same external radius as one another, which is slightly greater than the corresponding dimensions of the coupling surfaces (51, 52) on the clamping bolt (37),
   - these coupling surfaces (57, 58) have the same axial spacing from one another as the coupling surfaces (51, 52) on the clamping bolt (37) have,
   - the clamping clip (38) has two or more outer guide surfaces (63, 64) which, relative to the common axis, are constructed as cylindrical surfaces which have the same external radius as one another,
   - adjoining each cylindrical guide surface (63, 64) on the side remote from the tool head (22) is a respective frustoconical guide surface (65, 66) which tapers starting from the cylindrical guide surface (63, 64), whose surface normals are aligned parallel to one another and whose radius difference is at least equal to or greater than the radius difference of the coupling surfaces (51, 52) on the clamping bolt (37),
   - adjoining the frustoconical guide surface (65, 66) is a transition surface (67, 68) which extends as far as the start of the adjacent cylindrical guide surface (64) or in the direction of the end of the clamping clip (38) and whose external radius is not greater than the smallest radius of the frustoconical guide surface (65, 66),
   - provided on the tool holder (21) or on the part (69) connected thereto are two or more inner guide surfaces (71, 72) which are constructed as cylindrical surfaces having the same internal diameter as each other, which is at least equal to twice the external radius of the outer guide surfaces (63, 64) on the clamping clip (38),
   - adjoining each cylindrical guide surface (71, 72) on the side facing the tool head (22) is a respective frustoconical guide surface (73, 74) which widens from the cylindrical guide surface (71, 72), whose surface normals are aligned parallel to one another and whose radius difference is at least equal to or greater than the radius difference of the coupling surfaces (51, 52) on the clamping bolt (37),
   - the transition points between a respective outer cylindrical guide surface (63, 64) and the frustoconical guide surface (65, 66) associated therewith on the clamping clip (38) have the same axial spacing from one another as the transition points between a respective inner cylindrical guide surface (71, 72) and the frustoconical guide surface (73, 74) associated therewith on the part (69) concerned of the tool holder (21) have from one another, and
   - adjoining the frustoconical guide surface (74) is a transition surface (75) which extends as far as the start of the adjacent inner cylindrical guide surface (71) or, where present, in the direction of the end of the longitudinal section, projecting beyond the frustoconical guide surface (73), of the part (69) of the tool holder (21).

8. Tool according to one of Claims 1 to 6, characterised by the following features:
   - the coupling surfaces (127") on the clamping bolt (124") are constructed as frustoconical surfaces,
   - these coupling surfaces (127") have the same internal diameter and the same external diameter as one another,
   - these coupling surfaces (127"), which are preferably two or more in number, have the same axial spacing from one another,

- adjoining the smaller diameter of the coupling surfaces (127") is a respective transition surface (155") which extends as far as the external diameter of the adjacent coupling surface (127"),
- there are on the clamping bolt (124") two longitudinal grooves (141") which are aligned parallel with respect to the common axis (128), which start from the free end of the clamping bolt (124") and which extend in the direction of the tool head (122) at least as far as the last coupling surface (127") or further, whereof the groove root (142") has a radial spacing from the common axis (128) which is at most equal to or smaller than the small radius of the coupling surfaces (127") on the clamping bolt (124"), which are uniformly distributed on the periphery and which have a peripheral extent which is at least approximately equal to the total peripheral surface divided by twice the number of longitudinal grooves (141") or slightly smaller,
- the coupling surfaces (129") on the clamping clip (125") are, with reference to the common axis (128), constructed as frustoconical surfaces,
- these coupling surfaces (129") have the same internal radius and the same external radius as one another, which are slightly greater than the corresponding dimensions of the coupling surfaces (127") on the clamping bolt (124"),
- these coupling surfaces (129") have from one another the said axial spacing as the coupling surfaces (127") on the clamping bolt (124") have from one another,
- provided on the inside of the clamping clip (125") are longitudinal grooves (143") which are aligned parallel to the common axis (128), which start from the free end of the clamping clip (125") facing the tool head (122) and which extend in the direction of the end bearing surface for the draw head (134) at least as far as the coupling surface (127"), penetrating the furthest into the clamping clip (125") in the clamped position, of the clamping bolt (124") and an approximately adjoining transition surface (155") or further, whose groove root (144") has in the clamped position a radial spacing from the common axis (128) which is at least equal to or greater than the external radius of the coupling surfaces (127") on the clamping bolt (124"), which are uniformly distributed on the periphery and which have a peripheral extent which is at least equal to or greater than the peripheral extent of the coupling surfaces (145") remaining between the longitudinal grooves (141") on the clamping bolt (124"),
- the outer guide surface (131") of the clamping clip (125") is, related to the common axis (128), a cylindrical surface,
- the clamping clip (125") is coupled or couplable to a rotary apparatus,
- the inner guide surface (132) on the tool holder (122) or on a part connected thereto is constructed as a cylindrical surface whose internal diameter is at least approximately equal to twice the outer radius of the clamping clip (125").

9. Tool according to one of Claims 1 to 6, characterised by the following features:
- the coupling surface (127) on the clamping bolt (124) is formed by the flank, facing the tool head (122), of a cylindrical male thread (126) which has a particular thread lead and whose bearing flank has a particular angle of inclination with respect to the common axis (128),
- the coupling surface (129) on the clamping clip (125) is formed by the flank, remote from the tool head (122), of a cylindrical female thread which is matched to the male thread (126) of the clamping bolt (124),
- the outer guide surface (131) of the clamping clip (125) is, with reference to the common axis (128), a cylindrical surface,
- the clamping clip (125) is coupled or couplable to a rotary apparatus,
- the inner guide surface (132) on the tool holder (121) or on a part connected thereto is constructed as a cylindrical surface whose internal diameter is at least approximately equal to twice the external radius of the clamping clip (125).

10. Tool according to Claim 9, characterised by the features:
- provided on the clamping bolt (124') are longitudinal grooves (142) which are aligned parallel to the common axis, which start from the free end of the clamping bolt (124') and which extend in the direction of the tool head (122) at least as far as the last thread turn or beyond, whose groove root (142) has a radial spacing from the common axis

21

(128) which is at most equal to or smaller than half the core diameter of the male thread (126'), which are arranged distributed uniformly on the periphery and which have a peripheral extent which is at least approximately equal to the total peripheral length divided by twice the number of longitudinal grooves (141) or slightly smaller,

- provided on the inside of the clamping clip (125) are longitudinal grooves (143) which are aligned parallel to the common axis (128), which start from the free end, facing the tool head (122), of the clamping clip (125') and which extend in the direction of the end bearing surface for the draw head (134) at least as far as the thread turn of the clamping bolt (124') penetrating the furthest into the clamping clip (125') in the clamped position or further, whose groove root (144) has in the clamped position a radial spacing from the common axis (128) which is at least equal to or greater than the external radius of the male thread (126') on the clamping bolt (124'), which are arranged uniformly distributed on the periphery and which have a peripheral extent which is at least equal to or greater than the peripheral extent of the coupling surfaces (129') remaining between the longitudinal grooves (141) on the clamping bolt (124').

11. Tool according to Claim 7, characterised by the feature:
    - on the clamping clip (38), the outer cylindrical guide surfaces (63, 64) and the coupling surfaces (57, 58) on the inside are arranged in pairs, at least some of them or all of them, in respectively the same cross-sectional plane,
    - with in the former case preferably the coupling surface (58) which cooperates with the coupling surface (52) on the clamping bolt (37) closest to the end and the cylindrical guide surface (64) associated therewith being arranged in pairs in the same cross-sectional plane.

12. Tool according to one of Claims 7 to 11, characterised by the feature:
    - the coupling surface (51, 52) on the clamping bolt (37) has a frustoconical angle which is between 45° and 90°, preferably around 60°.

13. Tool according to one of Claims 9 or 10, characterised by the feature:
    - the male thread (126) is constructed in the manner of a buttress thread in which the bearing flank (127) has with respect to the common axis (128) an angle of inclination which is between 22.5° and 45°, preferably around 30°, and in which the non-bearing flank (155) encloses with the common axis (128) an angle of at least approximately 90°.

14. Tool according to one of Claims 8, 10, 12 or 13, characterised by the features:
    - arranged on the end side (152), remote from the tool head (122), of the clamping clip (125') is a spring (151) which is supported in the direction remote from the tool head (122) against a part (152) of the tool holder (121) and which is constructed such that it exerts in the clamped position of the clamping clip (125') on the latter a force in the direction towards the tool head (122),
    - the spring (151) is preferably formed by a set of disc springs which are preferably guided on the tension bar (133),
    - on the inside of the clamping clip (125') there is in at least one, preferably in each, of its longitudinal grooves (143) or in axial alignment therewith a stop (154) which is arranged in the path of motion of the part of the clamping bolt (125') provided with the coupling surfaces (127') in the axial direction at that point at which the end-face transition surface (155') adjoining the foremost coupling surface (127') of the clamping bolt (125') just bears against the stop (154) when the coupling surfaces (127') of the clamping bolt (125') and the coupling surfaces (129') of the clamping clip (125') are in the peripheral direction at least approximately flush with one another.

15. Dividable tool for cutting, having the following features:
    - a tool holder (181) is provided for securing to a machine tool,
    - a tool head (182) is provided with the tool tip,
    - the tool holder (181) and the tool head (182) are separable from one another at a separation point and
    - are connectable to one another by means of a coupling apparatus,
    - the coupling apparatus has guide and bearing surfaces matched to one another, some of which are arranged on the tool holder (181) and some of which are arranged on the tool head (182) central with respect to a common axis,

- the coupling apparatus has a clamping apparatus (183) which is arranged central with respect to the common axis,
- the clamping apparatus (183) has a clamping bolt (184)
- which is connected to the tool head (182) and
- which is provided with one or more coupling surfaces (186) whose surface normal has a radially outwardly directed component and an axial component directed towards the tool head (182), in the case of a plurality of coupling surfaces at least their surface normals in the same axial plane being aligned parallel to one another,
- the clamping apparatus (183) has a clamping clip (185) which is divided by a plurality of longitudinal slots into clamping jaws separated from one another,
- the clamping clip (185) is accommodated in the tool holder (181),
- the clamping clip (185) is provided on its inside with one or more coupling surfaces (187) whose surface normal has the opposite alignment to the surface normal of the coupling surfaces (186) on the clamping bolt (184), which are arranged at least in the clamped position at least partially in the same axial sections and in the same radius range as the coupling surfaces (186) on the clamping bolt (184) and which bear against these,
- the clamping clip (185) is provided on its outside with at least one outer guide surface (188),
- the clamping clip (185) has a bearing surface (192) which is annular at least in sections and which faces the tool head (182) and whose surface normal is aligned parallel to the common axis,
- the clamping apparatus (183) has for each outer guide surface (188) on the clamping clip (185) an inner guide surface (189)
- which is arranged in the interior of the tool holder (181) thereon or on a part connected thereto,
- which is arranged at least in a particular section of the axial range of motion of the outer guide surface (188) of the clamping clip (185) in the same axial range, and
- whose surface normal has the opposite alignment to the surface normal of the outer guide surface (188) on the clamping clip (185), characterised by the following features:

- the guide and bearing surfaces are constructed on the tool holder (185) and on the tool head (182) as regular truncated pyramidal surfaces matched to one another and having rounded-off edge regions which are at least approximately in the same radius range and which are formed by rectilinear generatrices which enclose, with a plane aligned normal to the common axis, a particular angle of inclination which is different by at least the value of the angle of the coefficient of friction between the two guide and bearing surfaces of 90$^\circ$,
- the coupling surface on the clamping bolt (184) is formed by the flank, facing the tool head (182), of a cylindrical male thread (186) which has a particular thread lead and whose bearing flank has a particular angle of inclination with respect to the common axis,
- the coupling surface on the clamping clip (185) is formed by the flank, remote from the tool head (182), of a cylindrical female thread (187) which is matched to the male thread (186) of the clamping bolt (184),
- the outer guide surface (188) of the clamping clip (185) is, with reference to the common axis, a cylindrical surface,
- the clamping clip (185) is coupled or couplable to a rotary apparatus (194),
- the bearing surface (192) of the clamping clip (185) is arranged on the outside thereof,
- the inner guide surface (189) on the tool holder (181) or on a part connected thereto is constructed as a cylindrical surface whose internal diameter is at least approximately equal to twice the external radius of the clamping clip (185),
- the clamping apparatus (183) has a bearing surface (193) which is arranged on the tool holder (181) or on a part connected thereto and which is matched as a countersurface to the bearing surface (192) on the clamping clip (185) to the latter.

16. Tool according to one of Claims 8 to 10 or 12 to 15, characterised by the features:
- the rotary apparatus (165; 194) has a toothed wheel (166) or a driving plate (195) which is preferably mounted on the tension bar (167), or which is mounted on the tool holder (181) or on a part (197) connected thereto or guided thereon, and which is coupled to the clamping clip (168; 185) in the tangential direction, preferably by means of one or more axially aligned pins (169) which engage in recesses and/or in the slots of the clamping clip (168),

- the rotary apparatus has a toothed rack (171) which crosses the common axis (128), which meshes with the toothed wheel (166) and which is coupled to a linear power drive (173), or

- the rotary apparatus (175) has a second toothed wheel (176) which meshes with the first toothed wheel (166) and is coupled to a rotary drive (177), or

- the rotary apparatus (194) has a rotary drive which is coupled or couplable to the driving plate (195).

17. Tool according to one of Claims 5 to 16, characterised by the features:
   - the clamping bolt (37) has at the connection point to the tool head (22) a frustoconical guide and bearing surface (41) which is preferably arranged with a certain spacing from the end of the clamping bolt (37) and which is preferably arranged on a collar (42) of the clamping bolt (37),
   - the tool head (22) has at the connection point to the clamping bolt (37) a frustoconical guide and bearing surface (45) which is matched to the associated guide and bearing surface (41) on the clamping bolt.

18. Tool according to Claim 17, characterised by the features:
   - the clamping bolt (37) has at the end facing the tool head (22) a cylindrical guide surface (44),
   - the tool head (22) has a cylindrical guide surface (47) which is matched to the cylindrical guide surface (44) on the end of the clamping bolt (37).

19. Tool according to Claim 17 or 18, characterised by the features:
   - the clamping bolt (37) has at the connection point to the tool head (22) a screw thread (43) which is preferably constructed as a buttress thread whose thread flank aligned approximately at right angles to the common axis (32) is remote from the tool head (22),
   - the screw thread (43) is arranged between the frustoconical bearing and guide surface (41) and the end of the screw bolt or, where present, the cylindrical guide surface (44) at the end of the clamping bolt,
   - the tool head (22) has a female thread (46) which is matched to the screw thread (43) on the clamping bolt (37).

**Revendications**

1. Outil divisible pour l'usinage avec enlèvement de copeaux avec les particularités suivantes:
   - il est prévu un porte-outil (21) pour la fixation sur une machine outil,
   - il est prévu une tête d'outil (22) avec le tranchant d'outil (23),
   - le porte-outil (21) et la tête d'outil (22) peuvent être séparés l'un de l'autre en un emplacement de séparation (24),
   - ils peuvent être reliés ensemble au moyen d'un dispositif d'accouplement (25)
   - le dispositif d'accouplement (25) comporte des surfaces de guidage et des surfaces d'appui (26, 27; 28, 29) accordées les unes aux autres qui sont disposées en partie sur le porte-outil (21) et en partie sur la tête d'outil (22) en étant centrées par rapport à un axe commun (32),
   - le dispositif d'accouplement (25) comporte un dispositif de serrage (31) qui est centré par rapport à l'axe commun (32),
   - le dispositif de serrage (31) comporte un goujon de serrage (37),
   - qui est relié à la tête d'outil (22), et
   - qui est muni d'une ou plusieurs surfaces d'accouplement (51, 52) dont la normale à la surface a une composante radiale dirigée vers l'extérieur et une composante axiale dirigée vers la tête d'outil (22), tandis que dans le cas de plusieurs surfaces d'accouplement (51, 52) au moins celles de leur normale à la surface placées dans le même plan axial, sont parallèles entre elles,
   - le dispositif de serrage (31) comporte une pince de serrage (38) qui est subdivisée en mâchoires de serrage (55) séparées les unes des autres par plusieurs fentes longitudinales,
   - la pince de serrage (38) est logée dans le porte-outil (22),
   - la pince de serrage (38) est munie sur sa face interne d'une ou plusieurs surfaces d'accouplement (57, 58), dont la normale à la surface a l'orientation inverse de celle de la normale à la surface des surfaces d'accouplement (51, 52) sur le goujon de serrage (37), et, au moins dans la position de serrage, ces surfaces d'accouplement (57, 58) sont disposées au moins partiellement dans les mêmes tronçons axiaux et dans la même zone de demi diamètre que les surfaces d'accouplement (51, 52) sur le goujon de serrage (37) et s'appliquent contre ces surfaces,

- la pince de serrage (38) est munie sur sa face externe, d'au moins une surface de guidage externe (65, 66),
- la pince de serrage (38) comporte une surface d'appui plane (76) en forme d'anneau circulaire, tournée vers la tête d'outil (22) et dont la normale à la surface est parallèle à l'axe commun (32),
- la surface d'appui (76) est disposée à l'intérieur de la pince de serrage (38) à l'extrémité opposée à la tête d'outil (21),
- le dispositif de serrage (31) comporte une tige de traction (77) reliée ou susceptible d'être reliée à un entraînement mécanique, et qui est centré sur l'axe commun (32) et s'étend à l'intérieur de l'espace interne de la pince de serrage (38) au-delà de la surface d'appui (76) sur la pince de serrage (38),
- à son extrémité pénétrant dans l'espace interne de la pince de serrage (38), la tige de traction (77) est munie d'une tête de traction (78),
- qui comporte une surface d'appui plane (79) en forme d'anneau circulaire, opposée à la tête d'outil (22), et qui est placée au moins partiellement dans la même zone de demi diamètre que la surface d'appui (76) de la pince de serrage (38),
- le dispositif de serrage (31) comporte, pour chaque surface de guidage externe (65, 66) sur la pince de serrage (38), une surface de guidage interne (73, 74),
- qui est disposée à l'intérieur du porte-outil (21) sur celui-ci ou bien sur une pièce (69) reliée à celui-ci,
- et qui, tout au moins sur un tronçon déterminé de la zone de déplacement axial des surfaces de guidage externes (65, 66) de la pince de serrage (38) est disposée sur la même zone axiale, et
- dont la normale à la surface a l'orientation opposée à celle de la normale à la surface des surfaces de guidage externes (65, 66) sur la pince de serrage (38), outil divisible caractérisé en ce que :

- les surfaces de guidage et les surfaces d'appui (26, 27) sont réalisées sur le porte-outil (21) et sur la tête d'outil (22) sous la forme de surfaces de troncs de pyramides (29, 29') accordés les uns aux autres, avec des zones d'arêtes (28, 28') arrondies qui sont placées au moins approximativement dans la même zone de demi diamètre,
- les surfaces de guidage et les surfaces d'appui (26, 27) sont formées par des lignes-enveloppes rectilignes qui délimitent avec un plan (33) orienté perpendiculairement par rapport à l'axe commun (32) un angle d'inclinaison déterminé qui diffère au moins de 90° de la valeur angulaire du coefficient de frottement ($\mu$) entre les deux surfaces de guidage et d'appui (26, 27).

2. Outil selon la revendication 1, caractérisé en ce que :

- les surfaces de guidage et les surfaces d'appui (26, 27) comportent trois flancs (29) au moins approximativement rectilignes et trois zones d'arêtes (28) arrondies dont la forme de section transversale est constituée par une épicycloïde ou bien par une courbe équidistante à celle-ci pour laquelle le rapport du demi diamètre (r) de la roue planétaire au demi diamètre (R) de la roue de base est de 1 : 3 et pour laquelle l'excentricité est e = $r^2/r + R$.

3. Outil selon la revendication 1, caractérisé en ce que :

- les surfaces de guidage et les surfaces d'appui (26', 27') comportent quatre flancs (29') au moins approximativement rectilignes et quatre zones d'arêtes (28') arrondies, pour lesquelles, de préférence, les surfaces de transition entre les flancs (29') et les surfaces arrondies (28') sont réalisées sans à-coup.

4. Outil selon une des revendications 1 à 3 caractérisé en ce que :

- des deux surfaces de guidage et d'appui, la surface (26, 26') prévue sur le porte-outil (21) est réalisée sous la forme de surface interne, tandis que la surface (27, 27') prévue sur la tête d'outil (22) est réalisée sous la forme de surface externe.

5. Outil selon une des revendications 1 à 4 caractérisé en ce que :
   - les surfaces de guidage et d'appui (26, 27) sont limitées à une petite zone de demi diamètre qui se raccorde aux surfaces périphériques externes ou internes (34, 35), se raccordant en direction axiale, de la partie d'outil correspondante (21, 22).

6. Outil selon la revendication 4 ou la revendication 5, caractérisé en ce que :
   - les lignes enveloppes des surfaces en troncs de pyramides (26, 27 et 26', 27') et des zones d'arêtes arrondies (29, 29') se coupent tout au moins approximativement dans la zone axiale de la surface d'accouplement (52), la plus éloignée de la tête d'outil (22), du goujon de serrage (37).

7. Outil selon une des revendications 1 à 6 caractérisé en ce que :
   - les surfaces d'accouplement (51, 52) sur le goujon de serrage (37) sont réalisées sous la forme de surfaces de troncs de cônes,
   - ces surfaces d'accouplement (51, 52) ont réciproquement le même diamètre interne et le même diamètre externe,
   - ces surfaces d'accouplement (51, 52) ont entre elles un intervalle axial déterminé,
   - au plus petit diamètre des surfaces d'accouplement (51, 52) se raccorde une surface de transition (53, 54) cylindrique circulaire,
   - les surfaces d'accouplement (57, 58) sur la pince de serrage (38) sont, rapportées à l'axe commun (32), réalisées sous la forme de surfaces de troncs de cônes,
   - ces surfaces d'accouplement (57, 58) ont réciproquement le même demi diamètre interne et le même demi diamètre externe dont les cotes sont légèrement supérieures aux cotes correspondantes des surfaces d'accouplement (51, 52) sur le goujon de serrage (37),
   - ces surfaces d'accouplement (57, 58) ont entre elles le même intervalle axial qu'ont les surfaces d'accouplement (51, 52) sur le goujon de serrage (37),
   - la pince de serrage (38) a deux ou plusieurs surfaces de guidage externes (63, 64), qui, rapportées à l'axe commun, sont réalisées sous la forme de surfaces cylindriques circulaires ayant réciproquement le même demi diamètre externe,
   - à chaque surface de guidage cylindrique (63, 64) se raccorde, sur le côté opposé à la tête d'outil (22), respectivement une surface de guidage (65, 66) en forme de tronc de cône qui va en se rétrécissant à partir de la surface de guidage cylindrique (63, 64), dont les normales à la surface sont parallèles entre elles et dont la différence de demi diamètre est au moins égale ou supérieure à la différence de demi diamètre des surfaces d'accouplement (51, 52) sur le goujon de serrage (37),
   - à la surface de guidage (65, 66) en forme de tronc de cône, se raccorde une surface de transition (67, 68) qui s'étend jusqu'au début de la surface de guidage cylindrique voisine (64) ou bien en direction de l'extrémité de la pince de serrage (38) et dont le demi diamètre externe n'est pas supérieur au plus petit demi diamètre de la surface de guidage (65, 66) en forme de tronc de cône,
   - sur le porte-outil (21) ou bien sur la pièce (69) reliée avec lui, il est prévu deux ou plusieurs surfaces de guidage internes (71, 72) qui revêtent la forme de surfaces cylindriques circulaires, qui ont réciproquement le même diamètre interne, qui est au moins égal à deux fois le demi diamètre externe des surfaces de guidage externes (63, 64) sur la pince de serrage (38),
   - à chaque surface cylindrique de guidage (71, 72) se raccorde, sur le côté tourné vers la tête d'outil (22), respectivement une surface de guidage (73, 74) en forme de tronc de cône qui s'élargit à partir de la surface de guidage cylindrique (71, 72), dont les normales à la surface sont parallèles entre elles et dont la différence de demi diamètre est au moins égale ou supérieure à la différence de demi diamètre des surfaces d'accouplement (51, 52) sur le goujon de serrage (37),
   - les points de transition entre respectivement deux surfaces de guidage cylindriques externes (63, 64) et les surfaces de guidage en forme de troncs de cônes (65, 66) qui leur sont associées sur la pince de serrage (38), ont entre eux le même intervalle axial qu'ont entre eux les points de transition entre respectivement une surface de guidage cylindrique interne (71, 72) et la surface de guidage en forme de tronc de cône (73, 74) qui lui est associée sur la pièce correspondante (69) du porte-outil (21),
   - à la surface de guidage en forme de tronc de cône (74) se raccorde une surface de transition (75) qui s'étend jusqu'au début de la surface interne cylindrique de guidage (71) voisine, ou bien, éventuellement, en direction de l'extrémité du tronçon longitudinal, dépassant la surface de guidage (73) en forme de tronc de cône, de la partie (69) du porte-outil (21).

8. Outil selon une des revendications 1 à 6 caractérisé en ce que :
   - les surfaces d'accouplement (127") sur le goujon de serrage (124") sont réalisées sous la forme de surfaces en troncs de cône,
   - ces surfaces d'accouplement (127") ont réciproquement le même diamètre interne et le même diamètre externe,
   - ces surfaces d'accouplement (127") dont le nombre est de préférence de deux ou supérieur à deux, ont entre elles le même intervalle axial,
   - au plus petit diamètre des surfaces d'accouplement (127") se raccorde respectivement une surface de transition (155") qui s'étend jusqu'au diamètre externe de la surface d'accouplement (127") voisine,
   - sur le goujon de serrage (124") il est prévu des gorges longitudinales (141") qui sont parallèles à l'axe commun (128), qui partent de l'extrémité libre du goujon de serrage (124"), et qui s'étendent en direction de la tête d'outil (122) jusqu'au moins à la dernière surface d'accouplement (127") ou au-delà, et le fond (142") de ces gorges est à une distance radiale de l'axe commun (128) qui est inférieure ou au maximum égale au petit demi diamètre des surfaces d'accouplement (127") sur le goujon de serrage (124"), qui sont réparties uniformément sur la périphérie et qui ont une extension périphérique qui est au moins approximativement égale ou légèrement inférieure à la périphérie totale divisée par deux fois le nombre des gorges longitudinales (141"),
   - les surfaces d'accouplement (129") sur la pince de serrage (125") sont, rapportées à l'axe commun (128), réalisées sous la forme de surfaces en troncs de cônes,
   - ces surfaces d'accouplement (129") ont réciproquement le même demi diamètre interne et le même demi diamètre externe dont les cotes sont légèrement supérieures aux cotes correspondantes des surfaces d'accouplement (127") sur le goujon de serrage (124"),
   - ces surfaces d'accouplement (129") ont entre elles le même intervalle qu'ont entre elles les surfaces d'accouplement (127") sur le goujon de serrage (124"),
   - sur le côté interne de la pince de serrage (125") il est prévu des gorges longitudinales (143") qui sont orientées parallèlement à l'axe commun (128), qui partent de l'extrémité libre, tournées vers la tête d'outil (122), de la pince de serrage (125") et qui s étendent en direction de la surface d'appui côté frontal pour la tête de traction (134) jusqu'à au moins la surface d'accouplement (127") du goujon de serrage (124") qui, en position de serrage se trouve au plus profond de la pince de serrage (125") et une surface de transition s'y raccordant éventuellement, ou au-delà, et le fond (144") des gorges étant, dans la position de serrage, à une distance radiale de l'axe commun (128) qui est au moins égale ou supérieure au demi diamètre externe des surfaces d'accouplement (127") sur le goujon de serrage (124"), qui sont uniformément réparties à la périphérie et qui ont une extension périphérique qui est au moins égale ou supérieure à l'extension périphérique des surfaces d'accouplement (145") restantes placées entre les gorges longitudinales (141") sur le goujon de serrage (124"),
   - la surface de guidage externe (131") de la pince de serrage (125") est, rapportée à l'axe commun (128), une surface cylindrique circulaire,
   - la pince de serrage (125") est couplée ou susceptible d'être couplée à un dispositif de rotation,
   - la surface de guidage interne (132) sur le porte-outil (122) ou bien sur une pièce reliée à celui-ci est réalisée sous la forme d'une surface cylindrique circulaire, dont le diamètre interne est au moins approximativement égal à deux fois le demi diamètre externe de la pince de serrage (125").

9. Outil selon une des revendications 1 à 6 caractérisé en ce que :
   - la surface d'accouplement (127) sur le goujon de serrage (124) est constituée par le flanc, tourné vers la tête d'outil (122) d'un filetage cylindrique du goujon (126), qui a un pas de filetage déterminé et dont le flanc portant a un angle d'inclinaison déterminé par rapport à l'axe commun (128),

- la surface d'accouplement (129) sur la face de serrage (125) est constituée par le flanc, opposé à la tête d'outil (122), d'un filetage cylindrique d'écrous, accordé au filetage (126) du goujon de serrage (124),

- la surface de guidage externe (131) de la pince de serrage (125) est, rapportée à l'axe commun (128), une surface cylindrique circulaire,

- la pince de serrage (125) est accouplée, ou bien susceptible d'être accouplée, à un dispositif de rotation,

- la surface de guidage interne (132) sur le porte-outil (121) ou bien sur une pièce reliée à celui-ci, est réalisée sous la forme d'une surface cylindrique circulaire dont le diamètre interne est au moins approximativement égal à deux fois le demi diamètre externe de la pince de serrage (125),

10. Outil selon la revendication 9, caractérisé en ce que :
- il est prévu sur le goujon de serrage (124') des gorges longitudinales (142) qui sont parallèles à l'axe commun, qui partent de l'extrémité libre du goujon de serrage (124'), et qui s'étendent en direction de la tête d'outil (122) jusqu'à au moins le dernier pas de filetage ou bien au-delà, et le fond (142) de ces gorges est à une distance radiale de l'axe commun (128) qui est inférieure ou au plus égale au demi diamètre du noyau du filetage (126') du goujon, gorges disposées uniformément à la périphérie et ont une extension périphérique qui est au moins approxi mativement égale ou légèrement inférieure à la longueur périphérique totale divisée par deux fois le nombre des gorges longitudinales (141).
- sur le côté interne de la pince de serrage (125) il est prévu des gorges longitudinales (143) qui sont parallèles à l'axe commun (128), qui partent de l'extrémité libre, tournée vers la tête d'outil (122), de la pince de serrage (125') et qui s'étendent en direction de la surface d'appui frontale pour la tête de traction (134) jusqu'au moins au pas de filetage, situé le plus profondément dans la pince de serrage (125') du goujon de serrage (124') ou bien au-delà, et, dans la position de serrage, le fond (144) des gorges est à une distance radiale de l'axe commun (128) qui est au moins égale ou supérieure au demi diamètre externe du filetage (126') sur le goujon de serrage (124'), filetage dont les parties subsistantes sont réparties uniformément à la périphérie et ont une étendue périphérique qui est au moins égale ou supérieure à l'étendue périphérique des surfaces d'accouplement (129') subsistant entre les gorges longitudinales (141) sur le goujon de serrage (124').

11. Outil selon la revendication 7, caractérisé en ce que :
- sur la pince de serrage (38) les surfaces de guidage cylindrique externes (63, 64) et les surfaces d'accouplement (57, 58) placées à l'intérieur, sont au moins pour parties ou bien toutes par paires, disposées dans les mêmes plans de section transversale,
- tandis que dans le premier cas mentionné, de préférence la surface d'accouplement (58), qui coopère avec la surface d'accouplement (52) et la surface de guidage cylindrique (64) qui lui est associée, sont disposées par paires dans les mêmes plans de section transversale.

12. Outil selon une des revendications 7 à 11, caractérisé en ce que :
- la surface d'accouplement (51, 52) sur le goujon de serrage (37) a un angle de tronc de cône se situant entre 45 et 90°, de préférence à 60°.

13. Outil selon une des revendications 9 ou 10, caractérisé en ce que :
- le filetage (126) du goujon est réalisé à la façon d'un filetage en dents de scie, dans lequel le flanc portant (127) a un angle d'inclinaison par rapport à l'axe commun (128) qui se situe entre 22,5° et 45°, de préférence 30°, et dans lequel le flanc non portant (155) délimite avec l'axe commun (128) un angle d'au moins approximativement 90°.

14. Outil selon une des revendications 8, 10, 12 ou 13, caractérisé en ce que :
- sur le côté frontal (152) opposé à la tête d'outil (122) de la pince de serrage (125') est disposé un ressort (151) qui prend appui dans la direction opposée à la tête d'outil (122) contre une partie (152) du porte-outil (121) et qui est prévu de façon que dans la position de serrage de la pince de serrage (125') il exerce sur celle-ci un effort en direction de la tête d'outil (122),

- le ressort (151) est de préférence, constitué par un jeu de ressorts à disques qui sont, de préférence, guidés sur la tige de traction (133),
- sur le côté interne de la pince de serrage (125') il est prévu dans au moins une, de préférence dans chacune, de ses gorges longitudinales (143) ou bien sur leur alignement axial, une butée (154) qui est disposée sur la trajectoire de la partie du goujon de serrage (125') munie des surfaces d'accouplement (127'), en direction axiale et à l'emplacement où la surface frontale de transition (155') se raccordant à la surface d'accouplement intérieur (127') du goujon de serrage (125') s'applique précisément contre la butée (154) lorsque les surfaces d'accouplement (127') du goujon de serrage (125') et des surfaces d'accouplement (129') de la pince de serrage (125') sont au moins approximativement alignées les unes avec les autres en direction périphérique.

15. Outil divisible pour l'usinage avec enlèvement de copeaux avec les particularités suivantes:
- il est prévu un porte-outil (181) pour la fixation sur les machines outils,
- il est prévu une tête outil (182) avec le tranchant d'outil,
- le porte-outil (181) et la tête d'outil (182) peuvent être séparés l'un de l'autre en un point de séparation et
- ils peuvent être reliés ensemble au moyen d'un dispositif d'accouplement,
- les dispositifs d'accouplement comportent des surfaces de guidage et des surfaces d'appui accordées les unes aux autres qui sont disposées en partie sur le porte-outil (181) et en partie sur la tête d'outil (182) en étant centrées par rapport à un axe commun,
- le dispositif d'accouplement comporte un dispositif de serrage (183) qui est centré par rapport à l'axe commun,
- le dispositif de serrage (183) comporte un goujon de serrage (184),
- qui est relié à la tête d'outil (182) et
- qui est muni d'une ou de plusieurs surfaces d'accouplement (186) dont la normale à la surface a une composante radiale dirigée vers l'extérieur et une composante axiale dirigée vers la tête d'outil (182), tandis que dans le cas de plusieurs surfaces d'accouplement, celles au moins de leur normale à la surface placée dans la même plan axial, sont parallèles entre elles,
- le dispositif de serrage (183) comporte une pince de serrage (185) qui est subdivisée en mâchoires de serrage séparées les unes des autres par plusieurs fentes longitudinales,
- la pince de serrage (185) est logée dans le porte-outil (181),
- la pince de serrage (185) est munie sur son côté interne d'une ou de plusieurs surfaces d'accouplement (187) dont la normale à la surface a la direction inverse des normales à la surface des surfaces d'accouplement (186) sur le goujon de serrage (184), et ces surfaces d'accouplement, au moins dans la position de serrage, sont disposées au moins partiellement dans les mêmes tronçons axiaux et dans la même zone de demi diamètre que les surfaces d'accouplement (186) sur le goujon de serrage (184) et s'appliquent contre ces surfaces,
- la pince de serrage (185) est munie sur son côté externe, d'au moins une surface de guidage externe (188),
- la pince de serrage (185) comporte une surface d'appui (192), en partie tout au moins de forme annulaire circulaire, tournée vers la tête d'outil (182), et dont la normale à la surface est dirigée parallèlement à l'axe commun,
- le dispositif de serrage (183) comporte pour chaque surface de guidage externe (188), sur la pince de serrage (185) une surface de guidage interne (189),
- qui est disposée à l'intérieur du porte-outil (181) sur celui-ci ou sur une pièce reliée à celui-ci,
- qui est disposée dans la même zone axiale, tout au moins sur une partie déterminée de la zone de dépla cement axial de la surface externe de guidage (188) de la pince de serrage (185) et
- dont la normale à la surface a l'orientation inverse de la normale à la surface de la surface de guidage externe (188) sur la pince de serrage (185), outil divisible caractérisé en ce que :
- les surfaces de guidage et les surfaces d'appui sont réalisées sur le porte-outil (185) et sur la tête d'outil (182) sous la forme de surfaces de troncs de pyramides régulières accordées les unes aux autres avec des zones d'arêtes arrondies et qui sont placées au moins approximativement dans la même zone de demi diamètre et sont constituées par des lignes enveloppes rectilignes qui délimitent avec un plan orienté perpendiculairement à l'axe commun, un angle d'inclinaison déterminé qui diffère d'au moins 90° de la valeur angulaire du coefficient de frottement entre les deux surfaces de guidage et d'appui,

- la surface d'accouplement sur le goujon de serrage (184) est constituée par le flanc, tourné vers la tête d'outil (182), d'un filetage cylindrique (186), qui a un pas de filetage déterminé et dont le flanc portant a un angle d'inclinaison déterminé par rapport à l'axe commun,
- la surface d'accouplement sur la pince de serrage (185) est constituée par le flanc, opposé à la tête d'outil (182), d'un filetage d'écrous cylindrique (187) qui est accordé au filetage (186) du goujon de serrage (184),
- la surface externe de guidage (188) de la pince de serrage (185) est, rapportée à l'axe commun, une surface cylindrique circulaire,
- la pince de serrage (185) est accouplée ou susceptible d'être accouplée, à un dispositif de rotation (194),
- la surface d'appui (192) de la pince de serrage (185) est disposée sur son côté externe,
- la surface interne de guidage (189) sur le porte-outil (181) ou bien sur une pièce reliée à celui-ci, est réalisée sous la forme d'une surface cylindrique circulaire dont le diamètre interne est tout au moins approximativement égal à deux fois le demi diamètre externe de la pince de serrage (185),
- le dispositif de serrage (183) comporte une surface d'appui (193) disposée sur le porte-outil (181) ou bien sur une pièce reliée à celui-ci, qui en tant que surface antagoniste pour la surface d'appui (192) sur la pince de serrage (185) est accordée à cette surface d'appui.

16. Outil selon une des revendications 8 à 10, ou bien 12 à 15, caractérisé en ce que :
- le dispositif de rotation (165; 194) comporte une roue dentée (166) ou bien un disque d'entraînement (195) qui est monté, de préférence, sur la tige de traction (167) ou bien sur le porte-outil (181) ou bien sur une pièce (197) reliée à celui-ci ou bien guidée sur lui, et cette roue dentée ou ce disque d'entraînement étant accouplé en direction tangentielle à la pince de serrage (168; 185), de préférence au moyen d'une ou plusieurs broches (169) orientées axialement qui viennent en prise dans des évidements et/ou dans des fentes de la pince de serrage (168),
- le dispositif de rotation comporte une crémaillère (171) qui croise l'axe commun (128), qui engrène avec la roue dentée (166), et qui est accouplé avec un entraînement mécanique (173) linéaire, ou bien
- les dispositifs de rotation (175) comportent une seconde roue dentée (176) qui engrènent avec la première roue dentée (166) et qui est accouplée avec un entraînement en rotation (177), ou bien
- le dispositif de rotation (194) comporte un entraînement en rotation qui est accouplé ou susceptible d'être accouplé avec le disque d'entraînement (195).

17. Outil selon une des revendications 5 à 16, caractérisé en ce que :
- le goujon de serrage (37) comporte au point de jonction avec la tête d'outil (22) une surface de guidage et d'appui (41) en forme de tronc de cône, qui est disposée de préférence à une certaine distance de l'extrémité du goujon de serrage (37) et qui est disposée de préférence sur une collerette (42) du goujon de serrage (37),
- la tête d'outil (22) comporte au point de jonction avec le goujon de serrage (37), une surface de guidage et d'appui (45) en forme de tronc de cône, qui est accordée à la surface de guidage et d'appui (41) correspondante sur le goujon de serrage.

18. Outil selon la revendication 17, caractérisé en ce que :
- le goujon de serrage (37) comporte à son extrémité tournée vers la tête d'outil (22), une surface de guidage cylindrique (44),
- la tête d'outil (22) comporte une surface de guidage cylindrique (47) qui est accordée à la surface de guidage cylindrique (44) à l'extrémité du goujon de serrage (37).

19. Outil selon la revendication 17 ou la revendication 18, caractérisé en ce que :
- le goujon de serrage (37) comporte au point de jonction avec la tête d'outil (22), un filetage (43) qui est réalisé, de préférence, sous la forme de filetage en dents de scie, et dont le flanc orienté approximativement à angle droit par rapport à l'axe commun (32) est opposé à la tête d'outil (22),

- le filetage (43) est disposé entre la surface d'appui et de guidage (41) en forme de tronc de cône, et l'extrémité du goujon de serrage ou bien, éventuellement, la surface de guidage cylindrique (44) à l'extrémité du goujon de serrage,

- la tête d'outil (22) comporte un filetage d'écrous (46) qui est accordé au filetage de vis (43) sur le goujon de serrage (37).

EP 0 169 543 B1

Fig.1

Fig.2

Fig. 3

Fig. 4

Fig. 5

Fig. 6

Fig. 7

Fig. 8

Fig. 9

Fig. 10

Fig. 11

35

Fig. 12

172    165

171

167

168    166

Fig. 13

165

171

173    166

176

177    175

Fig. 14